# NEUE EUROPÄISCHE PATENTSCHRIFT

(11) **EP 1 916 127 B2**
(45) Veröffentlichungstag und Bekanntmachung des Hinweises auf die Entscheidung über den Einspruch: **26.10.2016**
(45) Hinweis auf die Patenterteilung: 08.09.2010
(21) Anmeldenummer: 07025069.1
(22) Anmeldetag: 29.03.2001
(51) Int. Cl.: B60D 1/54

(54) **Anhängekupplung**
Tow bar
Attelage

(30) Priorität: 05.04.2000 DE 10017013
(43) Veröffentlichungstag der Anmeldung: 30.04.2008
(62) Teilanmeldung aus: 04019641.2
(73) Patentinhaber: Scambia Holdings Cyprus Limited, 3106 Limassol (CY)
(72) Erfinder: Kleb, Emmerich, 71706 Markgröningen (DE); Fischer, Michael, 71679 Asperg (DE); Riehle, Hans, 71638 Ludwigsburg (DE)
(74) Vertreter: Hoeger, Stellrecht & Partner Patentanwälte mbB

(56) Entgegenhaltungen:
- EP-A- 0 799 732
- EP-A- 1 024 036
- EP-A2- 1 090 782
- WO-A1-98/57813
- DE-A- 19 605 570
- DE-A- 19 858 978
- DE-A- 19 859 961
- DE-A1- 3 328 524
- DE-A1- 19 521 896
- DE-A1- 19 651 562
- DE-A1- 19 711 535
- DE-A1- 19 826 618
- DE-U- 7 233 868
- FR-A1- 2 450 167

## Beschreibung

Die Erfindung betrifft eine Anhängekupplung für Kraftfahrzeuge, umfassend einen fahrzeugfest angeordneten Schwenklagerkörper, an welchem ein Schwenkelement um eine Schwenkachse schwenkbar gelagert ist, einen sich ausgehend von dem Schwenkelement erstreckenden Kugelhals, der an seinem dem Schwenkelement abgewandten Ende eine Kupplungskugel trägt, und eine Verriegelungsvorrichtung zur formschlüssigen Festlegung des Schwenkelements gegenüber dem Schwenklagerkörper, wobei das Schwenkelement am Schwenklagerkörper in Richtung seiner Schwenkachse verschiebbar gelagert ist und durch Verschieben des Schwenkelements in Richtung der Schwenkachse das Schwenkelement in eine gegenüber dem Schwenklagerkörper schwenkbare Stellung, in welcher das Schwenkelement (60) zwischen der Arbeitsstellung und der Ruhestellung verschwenkbar ist, und eine gegenüber dem Schwenklagerkörper (20) durch Formschluss drehfest festgelegte Stellung bringbar ist.

Derartige Anhängekupplungen sind beispielsweise aus der gattungsbildenden DE 33 28 524 A1 bekannt.

Bei derartigen Anhängekupplungen ist jedoch eine aufwendig aufgebaute Verriegelungsvorrichtung erforderlich.

Der Erfindung liegt daher die Aufgabe zugrunde, eine Anhängerkupplung der gattungsgemäßen Art derart zu verbessern, dass die Verriegelungsvorrichtung möglichst einfach aufgebaut ist und sich in einfacher Art und Weise realisieren lässt.

Diese Aufgabe wird bei einer Anhängekupplung der eingangs beschriebenen Art erfindungsgemäß durch die Merkmale des Anspruchs 1 gelöst.

Der Vorteil dieser Lösung ist somit darin zu sehen, dass dem ohnehin relativ zum Schwenklagerkörper bewegbar zu lagernden Schwenkelement die Möglichkeit einer zusätzlichen Bewegung in Richtung der Schwenkachse verliehen wird, um mit dieser zusätzlichen Bewegung von einer gegenüber dem Schwenklagerkörper drehfest fixierten Stellung in eine gegenüber dem Schwenklagerkörper drehbare Stellung überzugehen und umgekehrt.

Damit sind in konstruktiv besonders vorteilhafter Weise die für die Schwenkbewegung und die Fixierung des Schwenkelements erforderlichen kinematischen Bewegungen auf dieses Schwenkelement verlagert.

Dies ist insbesondere auch deshalb vorteilhaft, da bei der Schwenkbewegung selbst auf das Schwenkelement keine großen Kräfte wirken, so dass die Schwenklagerung selbst nicht notwendigerweise so konstruiert sein muss, dass sie die gesamten im Zugbetrieb auf den Kugelhals wirkenden Kräfte aufnimmt, vielmehr kann die formschlüssige Fixierung des Schwenkelements so ausgebildet sein, dass sie einen nennenswerten Teil der auf den Kugelhals in Arbeitsstellung wirkenden Kräfte aufnimmt.

Hinsichtlich der Herstellung des Formschlusses wurden im Zusammenhang mit der bisherigen Erläuterung der erfindungsgemäßen Lösung keine näheren Angaben gemacht. So ist es besonders vorteilhaft, wenn das Schwenkelement mit mindestens einem ersten Formschlusselement drehfest verbunden ist, so dass sich dieses Formschlusselement mit dem Schwenkelement mitbewegt.

Damit könnte dieses erste Formschlusselement noch relativ zum Schwenkelement beispielsweise in Richtung der Schwenkachse linear bewegbar sein.

Besonders günstig ist es daher, wenn das mindestens eine erste Formschlusselement relativ zum Schwenkelement feststehend angeordnet ist, so dass dieses sowohl in Drehrichtung um die Schwenkachse als auch in Richtung der Schwenkachse gegenüber dem Schwenkelement unbeweglich ist.

Ferner ist es günstig, wenn der Schwenklagerkörper mit mindestens einem im Wesentlichen gegenüber der Schwenkachse drehfesten zweiten Formschlusselement verbunden ist, mittels welchem gemeinsam mit dem ersten Formschlusselement eine Drehfestlegung des Schwenkelements relativ zum Schwenklagerkörper erreichbar ist.

Dabei könnte das mindestens eine zweite Formschlusselement relativ zum Schwenklagerkörper beispielsweise in Richtung der Schwenkachse bewegbar sein.

Um eine möglichst spielfreie formschlüssige Festlegung des Schwenkelements gegenüber dem Schwenklagerkörper zu erreichen, ist vorzugsweise vorgesehen, dass das mindestens eine zweite Formschlusselement relativ zum Schwenklagerkörper unbeweglich fixiert ist.

Hinsichtlich der Wirkung des ersten und zweiten Formschlusselements im Falle einer Fixierung des Schwenkelements relativ zum Schwenklagerkörper wurden im Zusammenhang mit der bisherigen Erläuterung der einzelnen Ausführungsformen keine detaillierten Angaben gemacht.

So wäre es beispielsweise denkbar, zur drehfesten Festlegung des Schwenkelements relativ zum Schwenklagerkörper noch mindestens ein weiteres Formschlusselement vorzusehen, welches sowohl mit dem ersten Formschlusselement als auch mit dem zweiten Formschlusselement zusammenwirkt.

Aus Gründen einer möglichst einfachen konstruktiven Lösung ist es jedoch besonders günstig, wenn das erste Formschlusselement oder das zweite Formschlusselement in dem jeweils anderen Formschlusselement in Eingriff bringbar ist.

Um eine möglichst spielfreie Festlegung des Schwenkelements relativ zum Schwenklagerkörper in der drehfesten Stellung zu erreichen, ist vorzugsweise vorgesehen, dass mindestens eines der Formschlusselemente sich in einer Eingreifrichtung verjüngende Formschlussflächen aufweist, welche zur drehfesten Festlegung des Schwenkelements relativ zum Schwenklagerkörper dienen.

Diese sich verjüngenden Flächen haben die Wirkung, dass beim Zusammenwirken mit einem weiteren Formschlusselement, welches an diesen sich verjüngenden Flächen anliegt, eine spielfreie Festlegung gegen eine Drehbewegung um die Schwenkachse möglich ist.

Prinzipiell könnten diese sich in Eingreifrichtung verjüngenden Flächen beliebig ausgebildet sein. So wäre es denkbar, diese sich in Eingreifrichtung verjüngenden Flächen parabolisch oder hyperbolisch aufeinander zulaufen zu lassen.

Eine konstruktiv besonders einfache Lösung sieht jedoch vor, dass die sich in Eingreifrichtung verjüngenden Flächen konisch aufeinander zu verlaufen.

Derartige, sich in Eingreifrichtung verjüngende Flächen haben jedoch den Nachteil, dass sie dann, wenn der Keilwinkel größer als der Keilwinkel der Selbsthemmung ist, beim Auftreten großer Kräfte und insbesondere großer Drehmomente dazu neigen, wieder mit der jeweiligen Gegenfläche außer Eingriff zu kommen.

Aus diesem Grund sieht eine besonders günstige Lösung vor, dass die Formschlusselemente parallel zur Eingreifrichtung verlaufende Formschlussflächen aufweisen, welche verhindern, dass aufgrund zu großer Kräfte oder Drehmomente die Formschlusselemente außer Eingriff kommen.

Besonders günstig ist es, wenn diese in Eingreifrichtung parallel verlaufenden Formschlussflächen sich an die sich verjüngenden Formschlussflächen anschließen, so dass, falls aufgrund der sich verjüngenden Formschlussflächen die Formschlusselemente sich gegeneinander entgegengesetzt zur Eingreifrichtung verschieben, die parallel zur Eingreifrichtung verlaufenden Flächen stets dafür sorgen, dass die Formschlusselemente in Eingriff bleiben.

Hinsichtlich der Wirksamkeit der Formschlusselemente ist es beispielsweise denkbar, diese so auszubilden, dass sie in einer Richtung wirksam sind, während beispielsweise zusätzliche Formschlusselemente, zum Beispiel in Form von Anschlägen, zu einer Blockierung in der anderen Drehrichtung führen.

Alternativ oder ergänzend zu den bisher beschriebenen Lösungen sieht eine weitere besonders vorteilhafte Lösung vor, dass die Verriegelungsvorrichtung ein erstes Formschlusselement und ein zweites Formschlusselement umfasst, die durch einen ersten motorischen Antrieb in eine das Schwenkelement relativ zum Schwenklagerkörper drehfest festlegende Stellung bringbar sind, und dass das Schwenkelement mittels eines zweiten motorischen Antriebs zwischen einer Arbeitsstellung und einer Ruhestellung verschwenkbar ist.

Der Vorteil der erfindungsgemäßen Lösung ist darin zu sehen, dass mit dieser eine einfache voll motorisiert betätigbare Anhängekupplung mit schwenkbarem Kugelhals zur Verfügung steht.

Eine besonders günstige Lösung sieht jedoch vor, dass das Schwenkelement relativ zum Schwenklagerkörper mittels der Formschlusselemente in zueinander entgegengesetzten Drehrichtungen festlegbar ist.

Erfindungsgemäß ist eines der Formschlusselemente als Vorsprung ausgebildet, welches in das entsprechende andere der Formschlusselemente eingreift.

Ein derartiger Vorsprung kann beispielsweise als Zahn, Nocken oder Bolzen ausgebildet sein.

Im Zusammenhang mit der bisherigen Erläuterung der einzelnen Ausführungsformen der erfindungsgemäßen Lösung wurde nicht im einzelnen darauf eingegangen, in welcher Stellung der Kugelhals durch das Schwenkelement drehfest gegenüber dem Schwenklagerkörper fixiert sein soll.

Vorzugsweise ist dabei vorgesehen, dass das Schwenkelement zumindest in der Arbeitsstellung des Kugelhalses mittels der Formschlusselemente drehfest gegenüber dem Schwenklagerkörper festlegbar ist.

Im Zusammenhang mit der bisherigen Erläuterung der erfindungsgemäßen Lösung wurde nicht näher darauf eingegangen, wie eine Festlegung des Schwenkelements in der jeweiligen Stellung in Richtung der Schwenkachse erfolgen soll.

Beispielsweise wäre es denkbar, die einzelnen Stellungen definiert durch Formschluss festzulegen.

Um jedoch die Möglichkeit einer spielfreien drehfesten Festlegung des Schwenkelements relativ zum Schwenklagerkörper vorteilhaft realisieren zu können, ist vorzugsweise vorgesehen, dass die Formschlusselemente in ihrer das Schwenkelement relativ zum Schwenklagerkörper drehfest fixierenden Stellung mittels eines Keilgetriebes verspannbar sind.

Ein derartiges Verspannen der Formschlusselemente dient dazu, das Spiel im Wesentlichen zu beseitigen und somit eine spielfreie Fixierung des Schwenkelements relativ zum Schwenklagerkörper zu erhalten.

Hinsichtlich der Ausbildung des Schwenklagerkörpers zur formschlüssigen Fixierung des Schwenkelements wurden im Zusammenhang mit der bisherigen Erläuterung der einzelnen Ausführungsbeispiele keine weiteren Angaben gemacht. So ist es besonders günstig, wenn die Formschlusselemente zwischen dem Schwenkelement und einer Lagerwange des Schwenklagerkörpers angeordnet sind und wenn das Keilgetriebe einerseits auf das Schwenkelement und andererseits auf die Lagerwange wirkt und somit mittels des Keilgetriebes das Schwenkelement gegen die Lagerwange verspannbar ist

Beispielsweise wäre es dabei denkbar, dass das Keilgetriebe indirekt auf die das mindestens eine zweite Formschlusselement tragende Lagerwange wirkt, beispielsweise über eine weitere am Schwenklagerkörper vorgesehene Lagerwange.

Eine besonders günstige Lösung sieht jedoch vor, dass das Keilgetriebe unmittelbar an der Lagerwange angreift und somit das Schwenkelement gegen diese Lagerwange verspannt.

Diese Lösung hat den großen Vorteil, dass der Schwenklagerkörper nicht dazu dienen muss, die zum Verspannen erforderlichen Kräfte umzuleiten, sondern dass durch die unmittelbare Wirkung des Keilgetriebes auf die das mindestens eine zweite Formschlusselement tragende Lagerwange die Kräfte im Wesentlichen zwischen dem Schwenkelement und der Lagerwange wirksam sind und der übrige Teil des Schwenklagerkörpers von diesen zum Verspannen erforderlichen Kräften unbehelligt ist.

Ein derartiges Keilgetriebe kann in unterschiedlichster Art und Weise ausgebildet sein.

Eine Möglichkeit der Realisierung eines derartigen Keilgetriebes wäre die Verwendung eines Exzenters.

Als besonders günstige Form eines Keilgetriebes hat sich ein aus zwei ineinandergreifenden Gewinden gebildetes Keilgetriebe erwiesen, da dieses in einfacher Weise insbesondere durch elektromotorische Antriebe antreibbar ist.

Prinzipiell wäre es im Rahmen der erfindungsgemäßen Lösung denkbar, ein Keilgetriebe lediglich zum Verspannen der Formschlusselemente einzusetzen.

Besonders günstig ist es jedoch, wenn zur Erzeugung der Bewegung des Schwenkelements in Richtung der Schwenkachse relativ zum Schwenklagerkörper ein Keilgetriebe vorgesehen ist.

Ein derartiges Keilgetriebe kann grundsätzlich unterschiedlich von dem Keilgetriebe sein, das zum Verspannen der Formschlusselemente dient.

Eine besonders günstige Lösung sieht jedoch vor, dass dasselbe Keilgetriebe einerseits zum Verschieben des Schwenkelements relativ zum Schwenklagerkörper und andererseits auch zum Verspannen der Formschlusselemente dient.

Hinsichtlich des zum Verschieben des Schwenkelements vorgesehenen Keilgetriebes ist es ebenfalls zweckmäßig, wenn dieses durch zwei ineinandergreifende Gewinde gebildet ist.

Erfindungsgemäß ist das Schwenkelement mittels eines Elektromotors in Richtung der Schwenkachse zwischen den einzelnen Stellungen bewegbar.

Ferner ist es ebenfalls im Rahmen der erfindungsgemäßen Lösung von Vorteil, wenn das Erreichen der Spielfreiheit bei der drehfesten Festlegung des Schwenkelements relativ zum Schwenklagerkörper mittels eines motorischen Antriebs erfolgt, so dass auch die Fixierung in der jeweiligen Stellung des Schwenkelements motorisch erreichbar ist.

Insbesondere beim Vorsehen eines motorischen Antriebs hat sich ein Keilgetriebe entweder zur Bewegung des Schwenkelements relativ zum Schwenklagerkörper oder zum Verspannen der Formschlusselemente in das Schwenkelement drehfest fixierenden Stellung oder zu beiden Zwecken als vorteilhaft erwiesen.

Unter einem Keilgetriebe im Sinne dieser Erfindung ist dabei ein Getriebe zu verstehen, das mit einer schräg zu ihrer Bewegungsrichtung verlaufenden Keilfläche arbeitet. Derartige Keilgetriebe sind beispielsweise Schubkeilgetriebe, Kurvengetriebe, Exzentergetriebe oder Schraubengetriebe.

Hinsichtlich der Einleitung der Schwenkbewegung des Schwenkelements in seiner relativ zum Schwenklagerkörper drehbaren Stellung wurden bislang keine näheren Angaben gemacht.

Beispielsweise wäre es denkbar, das Schwenkelement in seiner gegenüber dem Schwenklagerkörper verschwenkbaren Stellung manuell zu verschwenken.

Als besonders günstig hat es sich jedoch erwiesen, wenn das Schwenkelement in seiner relativ zum Schwenklagerkörper verschwenkbaren Stellung motorisch, vorzugsweise mittels eines Elektromotors, zwischen einer Arbeitsstellung und einer Ruhestellung verschwenkbar ist.

Ein derartiger motorischer Antrieb kann ein ausschließlich für die Schwenkbewegung vorgesehener Schwenkantrieb sein.

Alternativ dazu ist es aber auch möglich, den Schwenkantrieb von einem motorischen Antrieb abzuleiten, welcher die Verschiebung des Schwenkelements in Richtung der Schwenkachse zwischen den einzelnen Stellungen bewirkt.

Beispielsweise wäre dies durch umschaltbare Kupplungen denkbar, so dass einerseits von einem motorischen Antrieb eine Verschiebung des Schwenkelements relativ zum Schwenklagerkörper in Richtung der Schwenkachse bewirkbar ist und beispielsweise durch umschaltbare Kupplungen ein Verschwenken des Schwenkelements in der gegenüber dem Schwenklagerkörper drehbaren Stellung.

Aus Gründen einer konstruktiv möglichst einfachen Lösung sieht eine andere vorteilhafte Ausführungsform der erfindungsgemäßen Lösung vor, dass der Schwenkantrieb mit dem motorischen Antrieb für die Bewegung des Schwenkelements zwischen der drehfest fixierten Stellung und der gegenüber dem Schwenklagerkörper drehbaren Stellung über eine drehmomentauslösende Kupplung gekoppelt ist.

Eine derartige drehmomentauslösende Kupplung kann beispielsweise eine bei Überschreiten eines maximal Drehmoments ausrastende Kupplung sein oder eine Rutschkupplung, welche beim Blockieren der Schwenkbewegung des Schwenkelements, beispielsweise durch Anschläge, nicht gleichzeitig den motorischen Antrieb für die Verschiebung des Schwenkelements zwischen den verschiedenen Stellungen blockiert, sondern die Möglichkeit schafft, das trotz blockierter Drehbewegung der Antrieb weiterläuft und somit in der Lage ist, das Schwenkelement trotz blockierter Schwenkbewegung von der gegenüber dem Schwenklagerkörper drehbaren Stellung in die drehfest fixierte Stellung und umgekehrt zu bewegen.

Hinsichtlich der Lagerung des Schwenkelements relativ zum Schwenklagerkörper wurden im Zusammenhang mit der bisherigen Erläuterung der einzelnen Ausführungsbeispiele keine näheren Angaben gemacht.

So sieht ein besonders vorteilhaftes Ausführungsbeispiel vor, dass das Schwenkelements mittels eines Lagerzapfens an dem Schwenklagerkörper gelagert ist.

Besonders zweckmäßig ist es dabei, wenn das Schwenkelement gegenüber dem Lagerzapfen drehbar ist, so dass zwischen beiden eine Relativbewegung möglich ist.

Besonders günstig bei Verwenden eines Lagerzapfens ist es, wenn über eine Verschiebung des Lagerzapfens eine Verschiebung des Schwenkelements zwischen den einzelnen Stellungen erreichbar ist.

Insbesondere ist dabei beispielsweise durch Zugwirkung oder Druckwirkung auf den Lagerzapfen auch ein Verspannen der Formschlusselemente in der Arbeitsstellung möglich.

Bei Verwendung eines Lagerzapfens, gegenüber welchem das Schwenkelement drehbar ist, besteht bei einer konstruktiv besonders günstigen Lösung aber auch die Möglichkeit, den Lagerzapfen drehbar im Schwenklagerkörper zu lagern und über den Lagerzapfen eine Schwenkbewegung des Schwenkelements relativ zum Schwenklagerkörper zu erreichen.

Besonders günstig ist es dabei, wenn zwischen dem drehbar angetriebenen Lagerzapfen und dem Schwenkelement eine drehmomentauslösende Kupplung vorgesehen ist, so dass über einen drehbaren Antrieb des Lagerzapfens auch die Möglichkeit besteht, das Schwenkelement zwischen zwei Anschlägen, beispielsweise einem Anschlag in der Arbeitsstellung und einem Anschlag in der Ruhestellung zu schwenken ohne dass bei Erreichen der Anschlagstellung eine Blockierung des motorischen Antriebs erfolgt.

Dies ist insbesondere vorteilhaft bei all den Lösungen, für welchen über einen einzigen motorischen Antrieb sowohl die Verschiebung des Schwenkelements als auch die Schwenkbewegung des Schwenkelements erreichbar ist.

Die erfindungsgemäße Lösung sieht vor, dass das Schwenkelement in Richtung der Schwenkachse zwischen einer gegenüber dem Schwenklagerkörper verschwenkbaren Stellung und einer Haltestellung bewegbar ist, in welcher das Schwenkelement am Schwenklagerkörper drehfest fixiert ist.

Das heißt, dass bei dieser Lösung mindestens zwei Stellungen des Schwenkelements relativ zum Schwenklagerkörper vorgesehen sind, zwischen denen das Schwenkelement durch Verschiebung in Richtung der Schwenkachse hin und her bewegbar ist. Die Erfindung sieht dabei vor, dass das Schwenkelement sowohl in der Ruhestellung des Kugelhalses als auch in der Arbeitsstellung des Kugelhalses in der einen Haltestellung steht.

Das heißt, dass bei dieser Lösung das Schwenkelement in Richtung der Schwenkachse aus der Haltestellung heraus bewegbar ist, um dieses um die Schwenkachse verschwenken zu können, beispielsweise von der Ruhestellung in die Arbeitsstellung oder von der Arbeitsstellung in die Ruhestellung und anschließend wieder ein Bewegen des Schwenkelements in die Haltestellung erfolgt, um dieses formschlüssig relativ zum Schwenklagerkörper zu fixieren.

Im Zusammenhang mit der erfindungsgemäßen Lösung wurde bislang nicht auf die den Betrieb derselben bei Verwendung von einem oder mehreren motorischen Antrieben eingegangen.

So sieht eine besonders vorteilhafte Lösung der erfindungsgemäßen Anhängekupplung vor, dass diese eine Steuerung umfasst, dass mit der Steuerung mittels mindestens eines Sensors die Bewegungen des Schwenkelements von der Arbeitsstellung in die Ruhestellung und umgekehrt überwachbar sind.

Insbesondere ist dabei vorgesehen, dass die Steuerung die Schwenkbewegung dann unterbricht, wenn die Steuerung eine Abweichung der Bewegung des Schwenkelements von der vorgegebenen Bewegungsform erkennt.

Eine derartige Abweichung der Bewegung des Schwenkelements von der vorgegebenen Bewegungsform lässt sich erfindungsgemäß besonders dann vorteilhaft realisieren, wenn die einzelnen Stellungen des Schwenkelements mittels des Sensors detektlerbar sind.

Beispielsweise ist es denkbar, mittels eines Sensors die Bewegungen des Schwenkelements ständig daraufhin zu überwachen, ob diese von der vorgesehenen Bewegungsform abweichen.

Besonders günstig lässt sich dies dann realisieren, wenn die vorgegebenen Bewegung des Schwenkelements durch Abtasten einer mit dieser korrelierten Kulissenbahn überwachbar ist.

Beispielsweise lässt sich in diesem Fall die Kulissenbahn so ausformen, dass der Sensor dann, wenn dieser ungehindert der Kulissenbahn folgen kann, kein Signal gibt, während bei einer Abweichung von der Kulissenbahn der Sensor ein Signal abgibt.

Um insbesondere bei einem einzigen Antrieb den Antrieb rechtzeitig abschalten zu können, ist vorzugsweise vorgesehen, dass die Steuerung eine Stromüberwachung für den motorischen Antrieb aufweist und dass bei Überschreiten eines maximal vorgegebenen Stroms die Steuerung den Antrieb unterbricht.

Damit lässt sich beispielsweise in den Endstellungen in einfacher Weise ein Abschalten des Antriebs erreichen.

Ferner ist aber auch mit dieser Lösung die Möglichkeit denkbar, dann den Antrieb abzuschalten, wenn der Kugelhals bei seiner Schwenkbewegung auf ein Hindernis, beispielsweise einen Nutzer des Kraftfahrzeugs trifft.

Ferner hat die erfindungsgemäße Lösung umfassend das Abschalten des Antriebs den Vorteil, dass unterschiedlichen Phasen der Bewegung unterschiedliche Schwellwerte zugeordnet werden können, so dass beispielsweise mittels eines hohen Schwellwerts beim Anlaufen ein hohes Los-Brechmoment zur Verfügung steht, während in all den Phasen, in welchen mit einer Kollision zwischen dem Kugelhals und einem Körperteil des Bedieners gerechnet werden muss, der Schwellwert niedriger angesetzt wird.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Rückansicht eines Kraftfahrzeugs mit einer erfindungsgemäßen Anhängekupplung;
- Fig. 2: einen Schnitt längs Linie 2-2 in Fig. 1;
- Fig. 3: eine Draufsicht in Richtung des Pfeils A in Fig. 1;
- Fig. 4: einen Schnitt durch ein erstes Ausführungsbeispiel einer erfindungsgemäßen Anhängekupplung, dargestellt entsprechend einer Blickrichtung in Richtung des Pfeils B in Fig. 3;
- Fig. 5: eine Darstellung ähnlich Fig. 4 eines zweiten nicht unter den Anspruch 1 fallenden Ausführungsbeispiels einer erfindungsgemäßen Anhängekupplung;
- Fig. 6: eine Darstellung eines Lagerzapfens des zweiten Ausführungsbeispiels mit einem Teil der Rutschkupplung;
- Fig. 7: eine Draufsicht auf ein weiteres Teil der Rutschkupplung mit einer Blickrichtung entsprechend einem Pfeil C in Fig. 8;
- Fig. 8: einen Schnitt längs Linie 8-8 In Fig. 7;
- Fig. 9: einen Schnitt längs Linie 9-9 in Fig. 5 bei Erreichen einer Ruhestellung;
- Fig. 10: eine Ansicht in Richtung des Pfeils D in Fig. 9;
- Fig. 11: eine Darstellung ähnlich Fig. 4 eines dritten Ausführungsbeispiels;
- Fig. 12: eine Darstellung ähnlich Fig. 4 eines vierten Ausführungsbeispiels;
- Fig. 13: eine ausschnittsweise vergrößerte Darstellung des Bereichs E in Fig. 12;
- Fig. 14: eine ausschnittsweise vergrößerte Darstellung von Formschlusselementen beim vierten Ausführungsbeispiel;
- Fig. 15: einen Schnitt längs Linie 15-15 In Fig. 12;
- Fig. 16: eine Darstellung ähnlich Fig. 14 einer ersten Variante des vierten Ausführungsbeispiels;
- Fig. 17: eine Draufsicht entsprechend Linie 17-17 in Fig. 16;
- Fig. 18: eine ausschnittsweise vergrößerte Darstellung einer im Bereich G dargestellten Detektionsnut im Schwenkelement entsprechend Fig. 12;
- Fig. 19: eine relative Stellung von Detektionsnut und Taster in der drehfest fixierten Stellung des Schwenkelements, welche der Arbeitsstellung des Kugelhalses entspricht;
- Fig. 20: eine relative Stellung von Detektionsnut und Taster in der schwenkbaren Stellung des Schwenkelements gegenüber dem Schwenklagerkörper und
- Fig. 21: eine relative Stellung von Detektionsnut und Taster in der Stellung des Schwenkelements, welche der Ruhestellung des Kugelhalses entspricht.

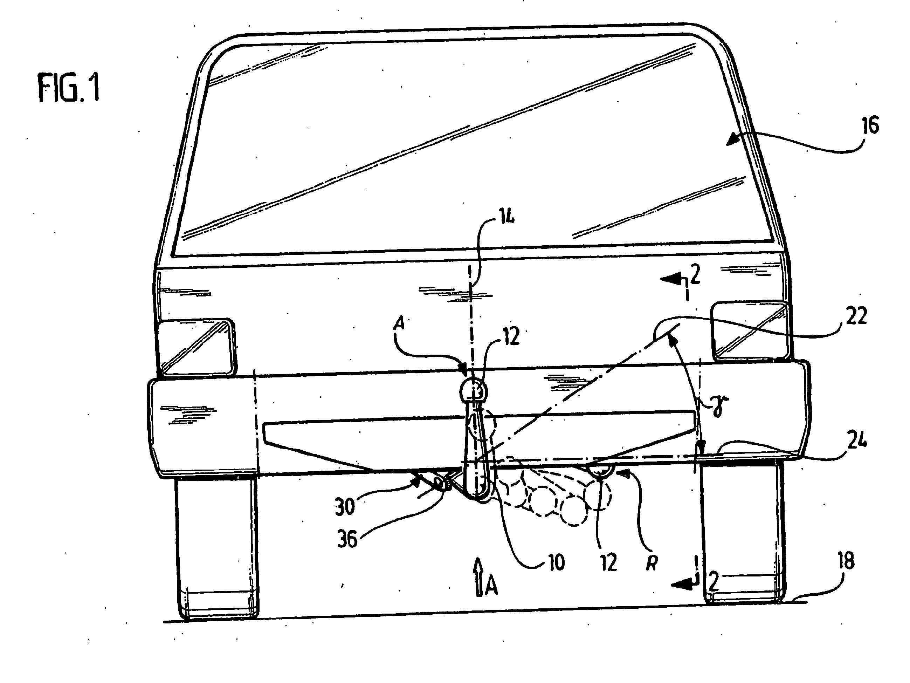

Eine in Fig. 1 dargestellte erfindungsgemäße Anhängekupplung umfasst einen Kugelhals 10 mit einer Kupplungskugel 12, wobei der Kugelhals in einer Arbeitsstellung A sich in einer Längsmittelebene 14 eines Kraftfahrzeugs 16 erstreckt und die Kupplungskugel 12 auf einer einer Fahrbahn 18 abgewandten Seite des Kugelhalses 10 steht.

Dieser Kugelhals 10 ist bei der erfindungsgemäßen Kupplung von einer Arbeitsstellung A in eine Ruhestellung R schwenkbar, wobei die Schwenkachse beliebig ausgerichtet sein kann. Die Schwenkachse kann senkrecht zur Längsmittelebene 14 in horizontaler Richtung verlaufen, die Schwenkachse kann in der Längsmittelebene 14 in ungefähr vertikaler Richtung verlaufen.

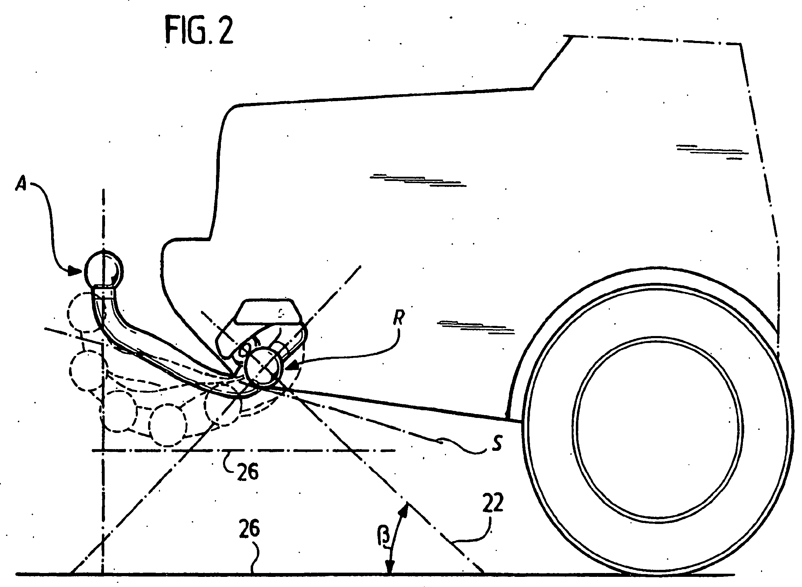

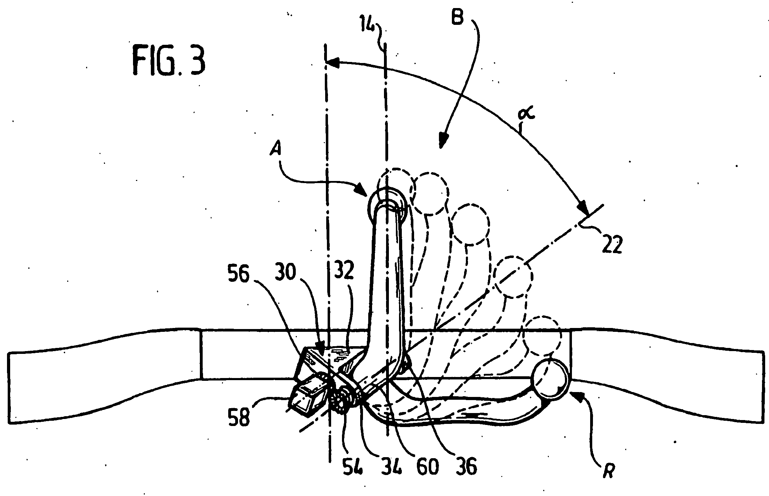

Außerdem ist es denkbar, wie bei dem Beispiel in Fig. 1, 2 und 3 dargestellt, die Schwenkachse 22 in einem Winkel α gegenüber der Längsmittelebene 14 des Kraftfahrzeugs 16 verlaufen zu lassen, wobei der Winkel α im Bereich von ungefähr 40° bis ungefähr 70° liegt und die Schwenkachse 22 in einem Winkel β relativ zur in der Längsmittelebene 14 liegenden Horizontalen 26 verlaufen zu lassen, wobei der Winkel β im Bereich von ungefähr 30° bis ungefähr 50° liegt, und außerdem die Schwenkachse 22 in einem Winkel γ gegenüber einer senkrecht auf der Längsmittelebene 14 stehenden Horizontalen 24 verlaufen zu lassen, wobei der Winkel γ im Bereich von ungefähr 20° bis ungefähr 40° liegt.

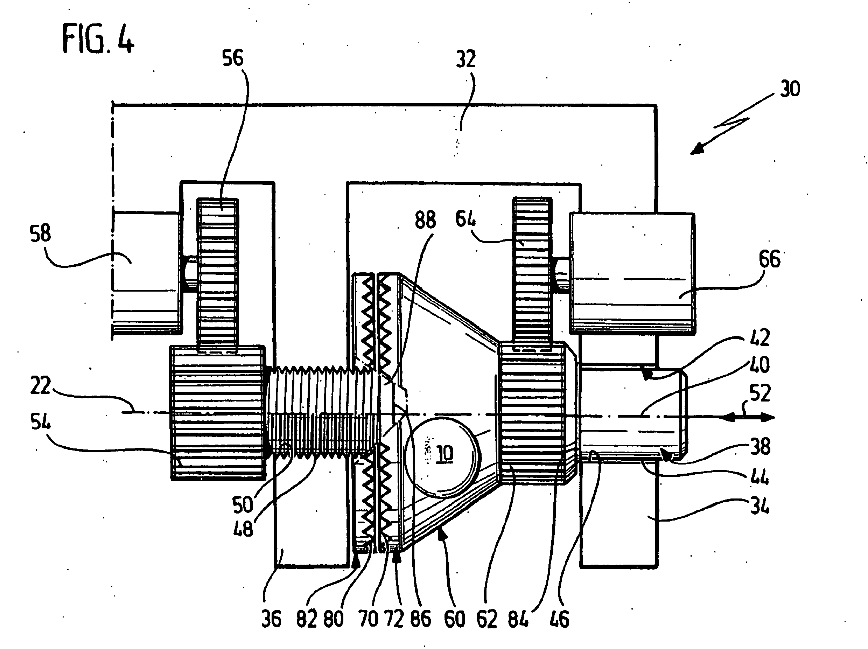

Ein erstes Ausführungsbeispiel einer erfindungsgemäßen Anhängekupplung, dargestellt in Fig. 4, umfasst nun zur drehbaren Lagerung des Kugelhalses 10 um die Schwenkachse 22 einen Schwenklagerkörper 30, welcher beispielsweise eine Basis 32 und zwei von der Basis 32 abstehende Lagerwangen 34 und 36 umfasst.

In den Lagerwangen 34 und 36 ist ein Lagerzapfen 38 um seine Achse 40 drehbar gelagert, wobei die Achse 40 die Schwenkachse 22 für den Kugelhals 10 darstellt.

Dabei erfolgt die Lagerung des Lagerzapfens 38 in der Lagerwange 34 beispielsweise mittels eines Gleitlagers 42, gebildet durch eine Umfangsfläche 44 des Lagerzapfens 38 und eine Lagerbohrung 46 in der Lagerwange 34.

Ferner trägt der Lagerzapfen 38 in seinem die Lagerwange 36 durchsetzenden Abschnitt ein Außengewinde 48, welches in ein innengewinde 50 in der Lagerwange 36 eingreift, so dass ein Drehen des Lagerzapfens 38 dazu führt, dass sich aufgrund der ineinandergreifenden Gewinde 48 und 50 der Lagerzapfen 38 in einer Richtung 52 parallel zur Achse 40 relativ zu den Lagerwangen 34 und 36 verschieben lässt.

Zum drehbaren Antrieb des Lagerzapfens 38 ist dieser auf einer der Lagerwange 34 gegenüberliegenden Seite der Lagerwange 36 mit einem Antriebsritzel 54 versehen, in welches ein Ritzel 56 eingreift, das durch einen Antrieb 58 antreibbar ist, wobei der Antrieb 58 vorzugsweise einen Elektromotor mit einem Untersetzungsgetriebe umfasst.

Auf dem Lagerzapfen 38 sitzt zwischen der Lagerwange 34 und der Lagerwange 36 ein als Ganzes mit 60 bezeichnetes Schwenkelement, welches drehfest mit einem Schwenkritzel 62 verbunden ist, das seinerseits durch ein Ritzel 64 antreibbar ist, um eine Schwenkbewegung des Schwenkelements 60 um die Schwenkachse 22 einzuleiten. Hierzu ist das Ritzel 64 durch einen Schwenkantrieb 66 angetrieben, welcher vorzugsweise ebenfalls einen Elektromotor mit einem Untersetzungsgetriebe umfasst.

Ferner trägt das Schwenkelement 60 auf seiner der Lagerwange 36 zugewandten Seite einen mit ersten Formschlusselementen 70 versehenen Träger 72, welcher im einfachsten Fall als Verzahnungsring ausgebildet und konzentrisch zur Achse 40 des Lagerzapfens 38 angeordnet ist.

Der Träger 72 ist dabei drehfest und in Richtung 52 unverschieblich mit dem Schwenkelement 60 verbunden, an welches außerdem der Kugelhals 10 angeformt ist.

Im einfachsten Fall sind der Kugelhals 10, das Schwenkelement 60 und der Träger 72 mit den ersten Formschlusselementen 70 als einstückiges Teil ausgebildet.

Ferner ist an der Lagerwange 36, und zwar auf ihrer dem Träger 72 mit den ersten Formschlusselementen 70 zugewandten Seite, ein zweite Formschlusselemente 80 aufweisender Träger 82 angeordnet, wobei die zweiten Formschlusselemente 80 den ersten Formschlusselementen 70 zugewandt sind und die ersten Formschlusselemente 70 und die zweiten Formschlusselemente 80 so ausgebildet sind, dass diese eine formschlüssige und spielfreie Verbindung miteinander eingehen können, um das Schwenkelement 60 spielfrei drehfest relativ zur Lagerwange 36 festzulegen.

Beispielsweise ist der Träger 82 als separates Teil ausgebildet, welches drehfest und in Richtung 52 unverschieblich mit der Lagerwange 36 verbunden ist. Es ist aber auch denkbar, den zweiten Träger 82 mit den zweiten Formschlusselementen 80 einstückig an die Lagerwange 36 anzuformen.

Außerdem ist der Lagerzapfen 38 auf einer dem Schwenkritzel 62 zugewandten Seite mit einer Schulter 84 versehen, welche in der Lage ist, das Schwenkritzel 62 zusammen mit dem Schwenkelement 60 in Richtung der Lagerwange 36 zu verschieben.

Darüber hinaus ist der Lagerzapfen 38 noch ferner mit einer Schulter 86 versehen, welche beispielsweise durch einen aufgesetzten Ring 88 gebildet ist und dazu dient, das Schwenkelement 60 in Richtung der Lagerwange 34 zu verschieben.

Somit sind das Schwenkelement 60 und das Schwenkritzel 62 gemeinsam zwar drehbar, jedoch in Richtung 52 im Wesentlichen unverschieblich auf dem Lagerzapfen 38 gelagert.

Zum drehfesten Festlegen der jeweiligen Schwenkstellung des Schwenkelements 60 relativ zur Lagerwange 36 und somit relativ zum Kraftfahrzeug wird nun der Antrieb 58 in Gang gesetzt, welcher über das Ritzel 56 das Antriebsritzel 54 antreibt und somit in der Lage ist, den Lagerzapfen 38 in Richtung 52 zu verschieben, und zwar entweder so, dass die Formschlusselemente 70 und 80 miteinander in Eingriff kommen, oder so, dass diese außer Eingriff kommen, wobei stets das Ritzel 64 und das Schwenkritzel 62 in Eingriff bleiben.

Sind die Formschlusselemente 70 und 80, wie in Fig. 4 dargestellt, außer Eingriff, so besteht die Möglichkeit, über den Schwenkantrieb 66 und das Ritzel 64 das Schwenkritzel 62 anzutreiben und somit das Schwenkelement 60 mitsamt dem Kugelhals 10 von der Arbeitsstellung A in die Ruhestellung R oder umgekehrt zu verschwenken, wobei die Arbeitsstellung A und die Ruhestellung R beispielsweise durch Endschalter erfassbar sind, so dass bei Erreichen der jeweiligen Stellung ein Stillsetzen des Schwenkantriebs 66 und somit ein Festhalten der Schwenkstellung erfolgen kann.

Je nach dem ob der Kugelhals 10 in der Arbeitsstellung A oder in der Ruhestellung R steht, besteht nun durch Betätigen des Antriebs 58 die Möglichkeit, die Formschlusselemente 70 und 80 miteinander in Eingriff zu bringen, wobei der Lagerzapfen 38 das Schwenkritzel 62 und das Schwenkelement 60 in Richtung der Lagerwange 36 beaufschlagt und diese soweit in Richtung der Lagerwange 36 schiebt, bis die ersten Formschlusselemente 70 spielfrei in die zweiten Formschlusselemente 80 eingedrückt sind.

Damit ist das Schwenkelement 60 mitsamt den Trägern 72 und 82 und den Formschlusselementen 70 und 80 gegen die Lagerwange 26 verspannt, wobei der Lagerzapfen 38 seinerseits durch das Außengewinde 48 in Richtung 52 in dem Innengewinde 50 in der Lagerwange 36 fixiert ist und somit dazu dient, die in axialer Richtung 52 desselben wirksamen Zugkräfte aufzubringen und damit eine spielfreie Fixierung des Schwenkelements 60 durch Verspannen gegen die Lagerwange 36 erreicht.

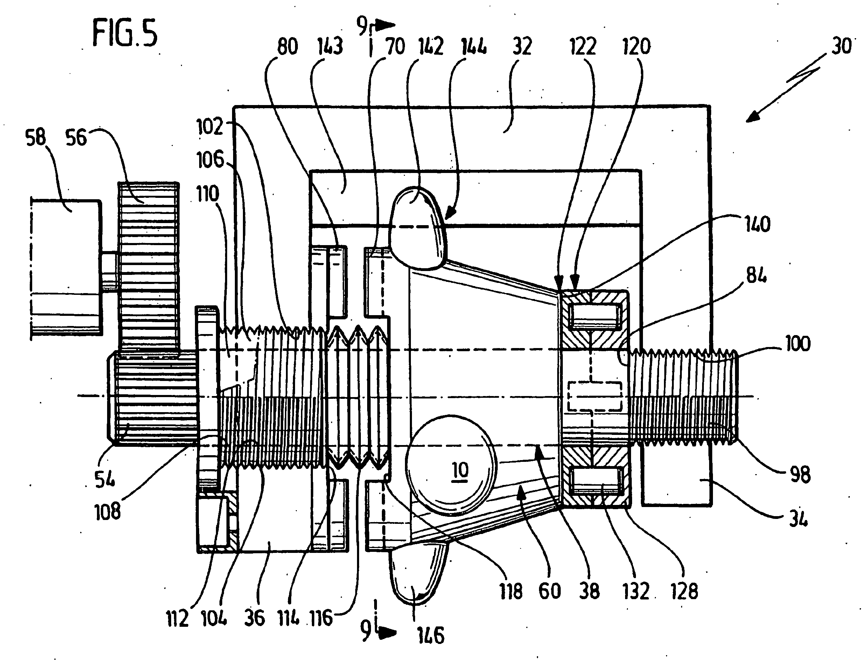

Bei einem zweiten Ausführungsbeispiel der erfindungsgemäßen Anhängekupplung, dargestellt in Fig. 5, sind diejenigen Teile, die mit denen des ersten Ausführungsbeispiels identisch sind, mit denselben Bezugszeichen versehen, so dass hinsichtlich der Ausführungen zu diesen Teilen vollinhaltlich auf das erste Ausführungsbeispiel Bezug genommen werden kann.

Im Gegensatz zum ersten Ausführungsbeispiel umfasst der Lagerzapfen 38 mit seinem die Lagerwange 34 durchsetzenden Abschnitt ein Außengewinde 98, welches in ein Innengewinde 100 der Lagerwange 34 eingreift.

Femerist die Lagerwange 36 mit einem Innengewinde 102 versehen, welches mit einem Außengewinde 104 einer Einstellhülse 106 in Eingriff ist, die die Lagerwange 36 durchsetzt und einen Lagerdurchbruch 108 aufweist, welcher mit einer Umfangsfläche 110 des Lagerzapfens 38 zusammen ein Gleitlager 112 für den Lagerzapfen 38 bildet.

Die Einstellhülse 106 wirkt dabei mit einer Stirnfläche 114 auf ein Tellerfederpaket 116, mit welchem eine der Stirnseite 114 zugewandte Stirnseite 118 des Schwenkelements 60 federelastisch beaufschlagbar ist, wobei sich durch Drehen der Einstellhülse 106 die Vorspannung des Tellerfederpakets 116 einstellen lässt.

Bei dem zweiten Ausführungsbeispiel ist im Gegensatz zum ersten Ausführungsbeispiel kein separater Antriebsmotor für die Einleitung und Durchführung der Schwenkbewegung des Schwenkelements 60 vorgesehen, sondern die Schwenkbewegung des Schwenkelements 60 ist von der Drehbewegung des Lagerzapfens 38 abgeleitet.

Aus diesem Grund ist als Schwenkantrieb 120 eine Rutschkupplung 122 vorgesehen, welche einen ersten Kupplungsring 128 aufweist, der drehfest mit dem Lagerbolzen 38 beispielsweise über einen Stift 130 verbunden ist und nockenähnliche Vorsprünge 132 trägt, welche in Vertiefungen 134 eines zweiten Kupplungsrings 136 eingreifen, der auf seiner den Vertiefungen 134 gegenüberliegenden Seite eine Reibfläche 138 trägt, die an einer dieser zugewandten Reibfläche 140 des Schwenkelements 60 anliegt.

Die Vertiefungen 134 sind dabei so ausgebildet, dass die Nocken 132 bezogen auf die Achse 40 um einen festgelegten Winkel α drehen können, so dass die zweite Kupplungsscheibe 136 um den Winkel α relativ zur ersten Kupplungsscheibe 128 begrenzt drehbar ist.

Ferner ist das Schwenkelement 60 noch mit einem ersten Anschlagnocken 142 versehen, welcher an einer ersten am Schwenklagerkörper 30 vorgesehenen und sich parallel zur Schwenkachse 22 erstreckenden ersten Anschlagfläche 143 eines Anschlagstegs 144 dann anlegbar ist, wenn der Kugelhals beim Schwenken von der Ruhestellung in die Arbeitsstellung A die Arbeitsstellung erreicht hat. Ferner ist am Schwenkelement 60 ein zweiter Anschlagnocken 146 angeordnet, welcher bei Erreichen der Ruhestellung R an einer zweiten Anschlagfläche 145 des Anschlagstegs 144 anlegbar ist.

Da das Schwenkelement 60 bei dem Verschwenken des Kugelhalses 10 von der Arbeitsstellung A in die Ruhestellung R oder umgekehrt jeweils einen Schwenkwinkel von ungefähr 200° durchläuft, entfernt sich der Anschlagnocken 142 von der Anschlagfläche 145 bis zu einem Winkelabstand von ungefähr 200°, bei dessen Erreichen der Anschlagnocken 142 an der zweiten Anschlagfläche 145 zur Anlage kommt, um den Kugelhals 10 bei Erreichen der Ruhestellung R an einer weiteren Drehbewegung zu hindern, oder der zweite Anschlagnocken 146 bewegt sich von der zweiten Anschlagfläche 145 weg bis der erste Anschlagnocken 142 die erste Anschlagfläche 143 erreicht.

Darüber hinaus ist zur Fixierung des Kugelhalses 10 in der Ruhestellung R dem Anschlagsteg 144 noch eine Tasche 148 zugeordnet, in welche der an der zweiten Anschlagfläche 145 anliegende Anschlagnocken 146 durch eine Bewegung in Richtung der Lagerwange 34 eintreten kann, die dadurch erzeugt wird, dass bei der Schwenkbewegung des Schwenkelements 60 um die Schwenkachse 22 der Anschlagnocken 146 an der zweiten Anschlagfläche 145 anschlägt und somit das Schwenkelement 60 nicht mehr weiter drehen kann, wobei in dieser Schwenkstellung der Kugelhals 10 bereits die Ruhestellung R erreicht hat. Dadurch, dass aber der Antrieb 58 weiterläuft, erfolgt ein Weiterdrehen des Lagerzapfens 38, so dass durch das in das Innengewinde 100 eingreifende Außengewinde 98 eine Verschiebung des Lagerzapfens 38 in Richtung der Lagerwange 34 erfolgt und sich somit auch die Kupplungsringe 128 und 136 weiter in Richtung der Lagerwange 34 bewegen, so dass aufgrund der Wirkung des Federpakets 116 auch eine Bewegung des Schwenkelements 60 in Richtung der Lagerwange 34 erfolgt und somit eine Verschiebung des zweiten Anschlagnockens 146 in Richtung der Lagerwange 34 und somit ein Eintauchen desselben in die Tasche 148, beispielsweise so lange, bis der Anschlagnocken 146 an einer Grundfläche 149 der Tasche 148 anliegt und durch das Tellerfederpaket 116 an diesem anliegend gehalten wird.

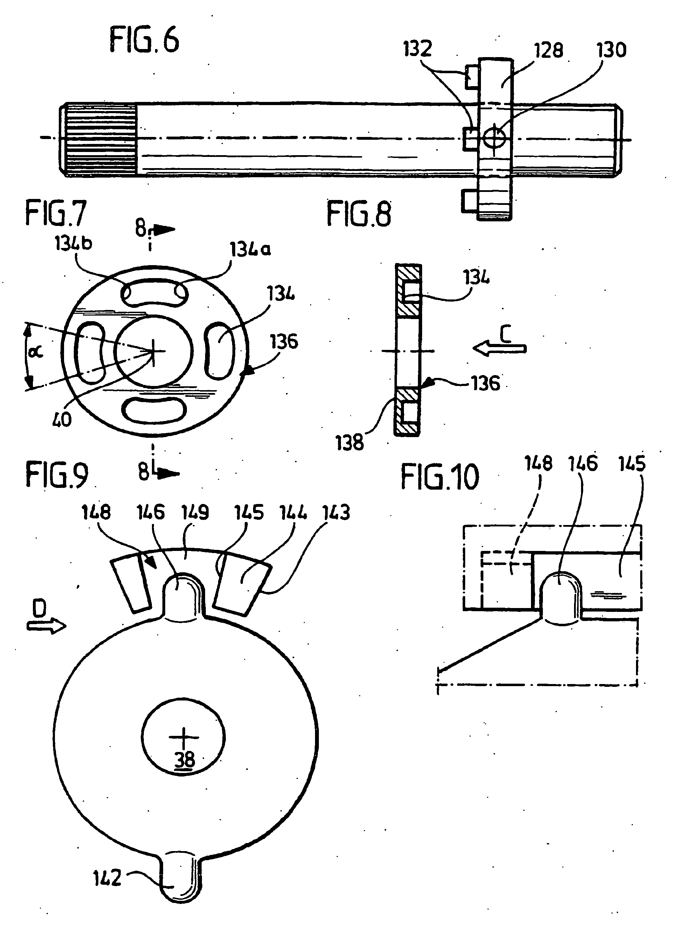

Die Tasche 148 führt nun zu einer formschlüssigen Festlegung des Schwenkelements 60 in der Ruhestellung R gegen eine Drehung um die Schwenkachse 22 und somit zu einer formschlüssigen Fixierung des Kugelhalses 10 in der Ruhestellung R, wie in Fig. 9 und 10 dargestellt.

Das zweite Ausführungsbeispiel der erfindungsgemäßen Anhängekupplung funktioniert nun folgendermaßen.

So lange die Formschlusselemente 70 und 80 nicht miteinander in Eingriff stehen, werden die Reibfläche 140 des Schwenkelements 60 und die Reibfläche 138 des zweiten Kupplungsrings 136 durch das Tellerfederpaket 116 in Anlage gehalten, da dieses auf die Stirnfläche 118 des Schwenkelements 60 einwirkt und das Schwenkelement 60 auf dem Lagerbolzen 38 frei drehbar und in Richtung 52 verschiebbar gelagert ist. Dadurch hält das Tellerfederpaket 116, dessen Vorspannung durch die Einstellhülse 106 festlegbar ist, stets die Reibflächen 140 und 138 in Anlage aneinander.

Ferner besteht bei nicht aneinandergleitenden Reibflächen 138 und 140, abgesehen von der relativen Drehbarkeit der ersten Kupplungsscheibe 128 relativ zur zweiten Kupplungsscheibe 136 um den Winkel α, eine drehfeste Verbindung über die Kupplungsscheiben 136 und 128 mit dem Lagerzapfen 38, aufgrund der drehfesten Verbindung der ersten Kupplungsscheibe 128 mit dem Lagerzapfen 38. Dadurch wird bei einer Drehung des Lagerzapfens 38 mittels des Antriebs 58 über das Ritzel 56 und das Antriebsritzel 54 eine Drehung des Schwenkelements 60 bewirkt, sofern diese nicht durch den Anschlagnocken 142 oder die Formschlusselemente 70 und 80 behindert ist.

Steht nun der Kugelhals 10 in Ruhestellung R und wird der Antrieb 58 eingeschaltet, so bewirkt eine Drehung des Lagerzapfens 38 um die Achse 40 aufgrund von dessen in das Innengewinde 100 eingreifendem Außengewinde 98 eine Verschiebung des Schwenkelements 60 in Richtung 52 so lange, bis der zweite Anschlagnocken 146 die Tasche 148 verlassen hat und anschließend ein Schwenken des Kugelhalses 10 von der Ruhestellung R in Richtung der Arbeitsstellung bei gleichzeitiger Verschiebung der Kupplungsscheiben 128 und 136 mitsamt dem Schwenkelement 60 in Richtung der Lagerwange 36, so lange, bis der vorgesehene Winkel von ungefähr 200° durchlaufen ist und der erste Anschlagnocken 142 an der ersten Anschlagfläche 144 zur Anlage kommt.

Dabei ist das Gewinde 98 des Lagerbolzens 38 so relativ zum Innengewinde 100 eingestellt, dass in diesem Fall nach wie vor noch die Formschlusselemente 70 und 80 außer Eingriff stehen.

In dem Moment, in dem der Anschlagnocken 140 durch Anliegen an der Anschlagfläche 144 die Schwenkbewegung des Schwenkelements 60 und des Kugelhalses 10 unterbricht, führt ein Weiterdrehen des Lagerbolzens 38 mittels des Antriebs 58 zu einem Durchrutschen der Rutschkupplung 122, wobei die Nocken 132 in den Vertiefungen 134 an dem in Drehrichtung vorderen Wand 134a derselben anliegen.

Durch das Weiterdrehen des Lagerzapfens 38 erfolgt aufgrund des in dem Innengewinde 100 eingreifenden Außengewindes 98 eine weitere Verschiebung des Schwenkelements 60 in Richtung der Lagerwange 36, und zwar so lange, bis die Formschlusselemente 70 und 80 miteinander in Eingriff kommen und durch den Lagerzapfen 38 gegeneinander verspannt sind.

In dieser Stellung sind das Schwenkelement 60 und der Kugelhals 10 in der Arbeitsstellung drehfest und spielfrei an dem Schwenklagerkörper 30 fixiert.

Soll nun ein Lösen der ineinander eingreifenden Formschlusselemente 70 und 80 erfolgen, so wird der Antrieb 58 so angesteuert, dass der Lagerbolzen 38 in umgekehrter Richtung gedreht wird. In diesem Fall sorgt das in das Innengewinde 100 in der Lagerwange 34 eingreifende Außengewinde 98 dafür, dass das Schwenkelement 60 sich von der Lagerwange 36 und somit dem zweiten Formschlusselement 80 weg bewegt, so lange, bis die Formschlusselemente 70 und 80 außer Eingriff kommen. Während dieser Zeit gleiten die Reibflächen 138 und 140 relativ zueinander.

Die Vertiefungen 134 und die relative Drehbeweglichkeit der ersten Kupplungsscheibe 128 zur zweiten Kupplungsscheibe 136 haben nun den Vorteil, dass beim Beginn der Drehbewegung des Lagerzapfens 38 bei noch ineinander eingreifenden und miteinander verspannten Formschlusselementen 70 und 80 die Kraft, die zum Verspannen der Formschlusselemente 70 und 80 über die Kupplungsscheiben 128 und 136 auf das Schwenkelement 60 wirkt, nicht zur Erhöhung der Haftreibung zwischen der Reibfläche 138 und der Reibfläche 140 beiträgt, da zu Beginn der Drehung des Lagerzapfens 38 die Nocken 132 die Möglichkeit haben, sich um den Winkelabstand α von der Wand 134a der Vertiefungen 134 bis zur Wand 134b zu bewegen, so dass der zweite Kupplungsring 136 aufgrund der Haftreibung relativ zum Schwenkelement 60 zunächst stehen bleiben kann, während sich der erste Kupplungsring 128 bereits um den Winkel α dreht. Dieser Winkel α reicht aus, um durch das in das Innengewinde 100 eingreifende Außengewinde 98 bereits eine Relativverschiebung des ersten Kupplungsrings 128 in Richtung der Lagerwange 34 zu erreichen, und zur Reduktion der Kraft auf die Reibflächen 138 und 140 beizutragen, so dass letztlich im Wesentlichen die Vorspannung des Tellerfederpakets 116 wiederum für die Kraft zwischen den Reibflächen 138 und 140 maßgebend ist und somit die Haftreibung durch Drehmomente in der üblichen, vorgesehenen Größenordnung überwunden werden kann.

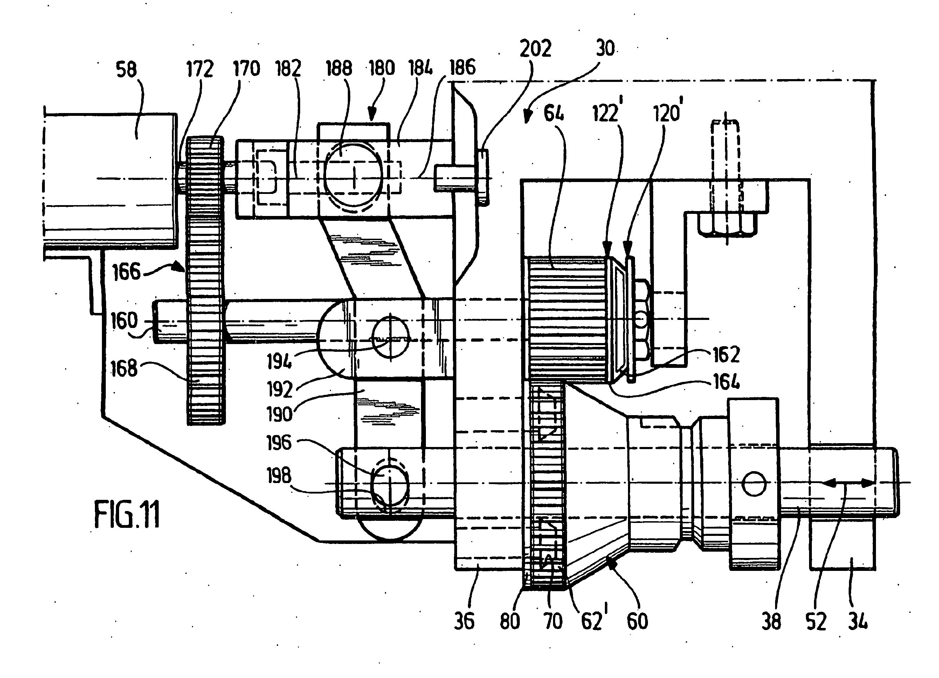

Bei einem dritten Ausführungsbeispiel, dargestellt in Fig. 11, sind diejenigen Elemente, die mit den voranstehenden Ausführungsbeispielen identisch sind, mit denselben Bezugszeichen versehen, so dass hinsichtlich der Funktion derselben auf die Ausführungen zu den voranstehenden Ausführungsbeispielen vollinhaltlich Bezug genommen werden kann.

Im Gegensatz zum ersten Ausführungsbeispiel ist das Schwenkelement 60 im Bereich seines größten Durchmessers mit einer Verzahnung versehen und bildet somit mit diesem mit der Verzahnung versehenen Bereich selbst das Ritzel 62', das mit dem Ritzel 64 in Eingriff ist, welches zum Antrieb des Schwenkelements 60 für die Schwenkbewegung zwischen der Arbeitsstellung A und der Ruhestellung R dient.

Im Gegensatz zum ersten Ausführungsbeispiel ist allerdings in Anlehnung an das zweite Ausführungsbeispiel das Ritzel 64 nicht über einen eigenen Antrieb angetrieben, sondern mittels eines Schwenkantriebs 120', der eine Rutschkupplung 122' umfasst, die zwischen einer in der Lagerwange 36 gelagerten Antriebswelle 160 und dem Ritzel 64 wirksam ist und beispielsweise mit einer Reibscheibe 162 auf eine Stirnfläche 164 des Ritzels 64 wirkt.

Ferner ist die Antriebswelle 160 durch ein Zahnradgetriebe 166 angetrieben, welches zwei Zahnräder 168 und 170 umfasst, wobei das Zahnrad 168 auf der Antriebswelle 160 sitzt und das Zahnrad 170 auf einer Welle 172 des Antriebs 58.

Die Welle 172 des Antriebs 58 treibt gleichzeitig noch einen als Ganzes mit 180 bezeichneten Stellantrieb, welcher eine Gewindespindel 182 umfasst, die in einem Spindellagereinheit 184 um ihre Spindelachse 186 drehbar jedoch in Richtung ihrer Spindelachse 186 axial unverschieblich gelagert ist.

Die Gewindespindel 182 durchsetzt dabei eine Spindelmutter 188, welche verschieblich in dem Spindellagereinheit 184 gelagert ist und durch Verdrehen der Spindel 182 in Richtung der Spindelachse 186 verschiebbar ist.

Die Spindelmutter 188 wirkt dabei auf einen Umlenkhebel 190, welcher in einem Zwischenlager um eine Kippachse 194 kippbar gelagert ist.

An dem Hebel 190 ist ferner ein Betätigungselement 196 angeordnet, welches beispielsweise als Stift ausgebildet ist, und ein Auge 198 im Lagerzapfen 38 durchsetzt.

Das Auge 198 ist beispielsweise auf einer dem Schwenkelement 60 gegenüberliegenden Seite der Lagerwange 36 im Lagerzapfen 38 angeordnet.

Wird nun durch Bewegen der Spindelmutter 188 mittels der Spindel 182 der Hebel 190 gekippt, so lässt sich damit der Lagerzapfen 38 in der Richtung 52 verschieben, um die Formschlusselemente 70 und 80 miteinander in Eingriff oder außer Eingriff zu bringen.

Dabei ist das Schwenkelement 60 frei drehbar, jedoch in Richtung 52 unverschieblich auf dem Lagerzapfen 38 gelagert, und bleibt aufgrund der Tatsache, dass das Ritzel 64 und das Schwenkritzel 62' unabhängig von der Verschiebung des Schwenkelements 60 in Richtung 52 in Eingriff stehen, stets antreibbar.

Um außerdem eine einfache Möglichkeit der Notentriegelung zu erhalten, ist die Spindellagereinheit 184 als Ganzes lösbar an dem Schwenklagerkörper 30, beispielsweise mittels einer Schraube 202 gehalten.

Zum Notbetrieb, beispielsweise bei einem defekten Antrieb 58 oder defekter Stromversorgung des Antriebs 58, wird somit einerseits der Antrieb 58 mitsamt der Welle 172 und dem Zahnrad 170 abgenommen. Danach lässt sich durch Lösen der Schraube 202 die gesamte Spindellagereinheit 184 von dem Schwenklagerkörper 130 lösen und damit der Hebel 190 so weit kippen, dass eine Verschiebung des Schwenklagers 60 mitsamt dem Lagerzapfen 38 in Richtung der Lagerwange 34 erfolgt und somit die Formschlusselemente 70 und 80 außer Eingriff bringbar sind. In dieser Stellung lässt sich dann manuell der Kugelhals 10 zwischen der Arbeitsstellung A und der Ruhestellung R hin und her verschwenken und nachfolgend fixieren, beispielsweise in der Arbeitsstellung A dadurch, dass die Spindellagereinheit 184 wiederum mit der Schraube 202 am Schwenklagerkörper 30 fixiert wird.

In gleicher Weise wie beim zweiten Ausführungsbeispiel lassen sich ein Anschlagelement und Anschlagnocken vorsehen, die die Schwenkbewegung des Schwenkelements 60 in der Arbeitsstellung und in der Ruhestellung begrenzen, wobei diese im Zusammenhang mit dem dritten Ausführungsbeispiel nicht nochmals im Detail beschrieben sind.

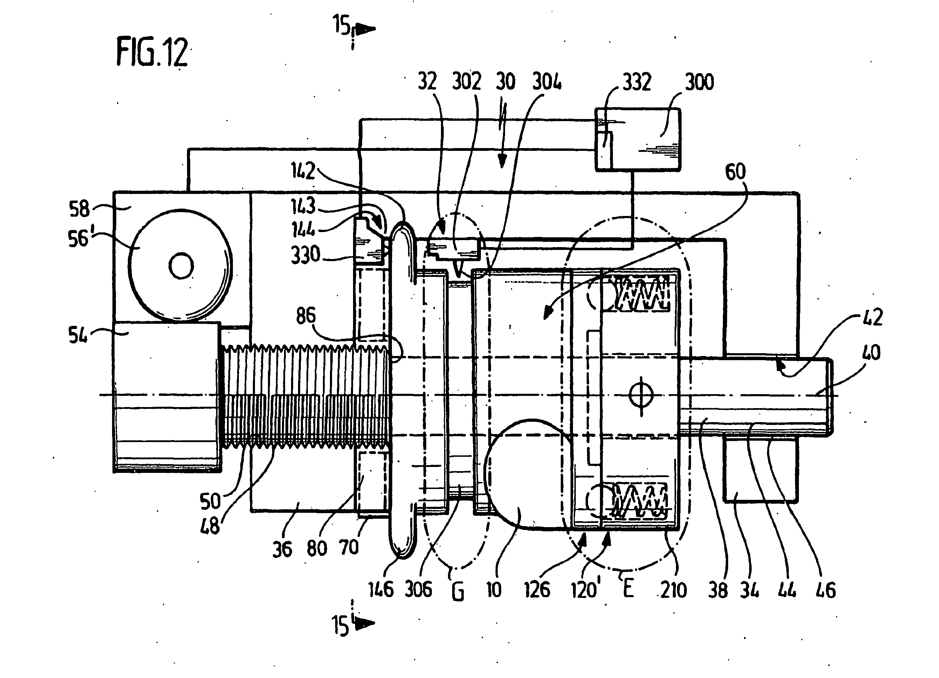

Bei einem vierten Ausführungsbeispiel, dargestellt in Fig. 12, sind diejenigen Teile, die mit denen des ersten und zweiten oder dritten Ausführungsbeispiels identisch sind, mit denselben Bezugszeichen versehen, so dass hinsichtlich der Beschreibung derselben vollinhaltlich auf das erste und das zweite Ausführungsbeispiel Bezug genommen werden kann.

Bei dem dritten Ausführungsbeispiel ist die Drehbewegung für das Schwenkelement 60 ebenfalls von der Drehbewegung des Lagerzapfens 38 abgeleitet, wobei dieser, wie beim ersten Ausführungsbeispiel beschrieben, mittels seines Außengewindes 48 in einem Innengewinde 50 der Lagerwange 36 drehbar und in Richtung 52 verschiebbar ist.

Zum Antrieb des Lagerzapfens 38 ist allerdings anstelle des Ritzels 56 eine Schnecke 56' vorgesehen, welche somit mit dem Antriebsritzel 54 gemeinsam ein selbstsperrendes Getriebe bildet.

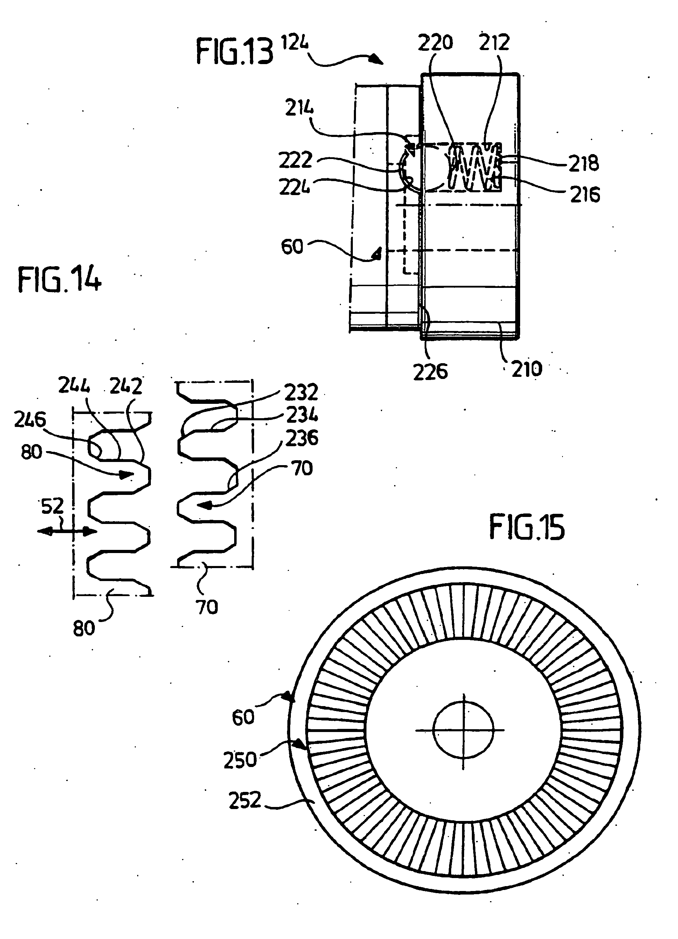

Darüber hinaus ist der Schwenkantrieb 120' nicht mit einer Rutschkupplung sondern einer Rastkupplung 124 versehen. Hierzu ist mit dem Lagerzapfen 38 eine drehfest verbundene Kupplungsscheibe 210 vorgesehen, in welcher, wie in Fig. 13 noch mal vergrößert dargestellt, Führungskanäle 212 für Rastkörper 214, vorzugsweise Rastkugeln vorgesehen sind, wobei in den Führungskanälen 212 jeweils noch eine Druckfeder 216 vorgesehen ist, die sich einerseits auf einem Boden 218 des jeweiligen Führungskanals 212 abstützt und andererseits eine dem Boden 218 zugewandte Rückseite 220 des Rastkörpers 214 beaufschlagt, welcher seinerseits mit einer Vorderseite 222 in eine kalottenähnliche Vertiefung 224 eingreift, die in einer dem Kupplungsring 210 zugewandten Stirnseite 226 des Schwenkelements 60 angeordnet ist.

Vorzugsweise ist eine Vielzahl derartiger kalottenähnlicher Vertiefungen 224 rotationssymmetrisch zur Achse 40 in der Stirnfläche 226 vorgesehen und es sind ebenfalls rotationssymmetrisch zur Achse 40 verteilte Nockenkörper 214 in dem Kupplungsring 210 vorgesehen.

Ferner liegt das Schwenkelement 60 in gleicher Weise wie beim ersten Ausführungsbeispiel an der Schulter 86 des Lagerzapfens 38 an, so dass das Schwenkelement 60 beim vierten Ausführungsbeispiel in Richtung 52 unverschiebbar zwischen der Schulter 86 und dem fest mit dem Lagerzapfen 38 verbundenen Kupplungsring 210 geführt ist, jedoch relativ zum Lagerzapfen 38 um die Achse 40 drehbar ist.

Als Formschlusselemente kommen bei dem dritten Ausführungsbeispiel, wie in Fig. 14 und 15 dargestellt, vorzugsweise Formschlusselemente 70 und 80 zum Einsatz, die einerseits frontseitig konisch zur Richtung 52 sich jeweils in Richtung des anderen Formschlusselements 70, 80 verjüngende Formschlussflächenbereich 232 bzw. 242 aufweisen, an welche sich ungefähr parallel zur Richtung 52 verlaufende Formschlussflächenbereiche 234 bzw. 244 anschließen, welche dann gefolgt sind durch den Formschlussflächenbereichen 232 bzw. 242 bezüglich der Formschlussflächenbereiche 234 bzw. 244 gegenüberliegende und sich in Richtung des jeweils anderen Formschlusselements 80, 70 erweiternde Formschlussflächenbereiche 236 bzw. 246.

Derartige Formschlusselemente sind dabei so ausgebildet, dass die Formschlussflächenbereiche 236 bzw. 246 die vorderen Formschlussflächenbereiche 242 bzw. 232 des jeweils anderen Formschlusselements 80, 70 spielfrei beim Einpressen der Formschlusselemente 70, 80 ineinander aufnehmen, während die Formschlussflächenbereiche 234 bzw. 244 eine Sicherung gegen ein Lösen der Formschlusselemente 70, 80 bei zu großem Drehmoment darstellen, da diese sich unabhängig von der Größe des Drehmoments aufgrund ihres zur Richtung 52 parallelen Verlaufs nicht lösen können.

Vorzugsweise sind beispielsweise die Formschlusselemente 70 an einem Ring 250 angeordnet, welcher auf einer der Lagerwange 36 zugewandten Stirnseite 252 des Schwenkelements 60 sitzt und mit dem Schwenkelement 60 sowohl drehfest als auch in Richtung 52 unverschieblich verbunden ist.

In gleicher Weise sind die Formschlusselemente 80 auf einem zeichnerisch nicht dargestellten Ring angeordnet, wobei die beiden die Formschlusselemente 70, 80 tragenden Ringe als identische Ringe herstellbar sind.

Als Beispiel für eine Verzahnung ist beispielsweise eine Hirth-Verzahnung vorgesehen.

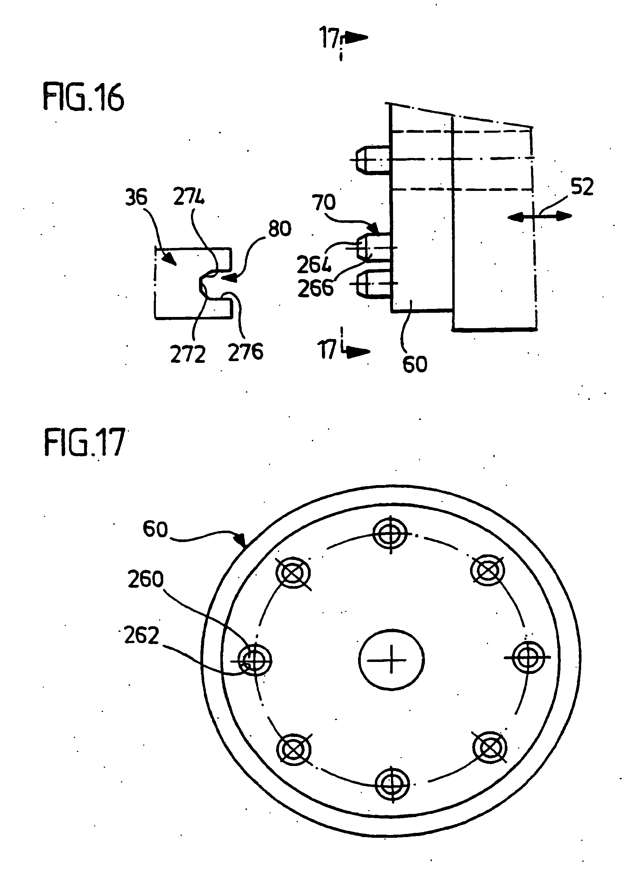

Bei einer Variante des dritten Ausführungsbeispiels, dargestellt in Fig. 16 und 17 sind die ersten Formschlusselemente 70 gegenüber dem vierten Ausführungsbeispiel vereinfacht ausgebildet.

Die ersten Formschlusselemente 70 sind dabei zylindrische Zapfen 260, welche in Bohrungen 262 im Schwenkelement 60 eingesetzt sind und an ihrer Stirnseite einen sich konisch verjüngenden Formschlussflächenbereich 264 tragen, während sich an diesen auf der dem Schwenkelement 60 zugewandten Seite ein parallel zur Richtung 52 verlaufender Formschlussflächenbereich 266 anschließt, der durch die zylindrische Mantelfläche der Stifte 260 gebildet ist.

Die zweiten Formschlusselemente 80 sind dabei als zylindrische Sacklöcher 270 ausgebildet, welche im Anschluss an einen Lochboden 272 sich konisch erweiternde Flächen 274 tragen, welche die konischen Formschlussflächenbereiche darstellen und die konischen Formschlussflächenbereiche 264 der Stifte 260 spielfrei aufnehmen. An diese konischen Formschlussflächenbereiche 274 schließen sich auf der dem Lochboden 272 gegenüberliegenden Seite zylindrische Wandflächen 276 der Sacklöcher 270 an, welche die parallel zur Richtung 52 verlaufenden Formschlussflächenbereiche bilden und die entsprechenden Formschlussflächenbereiche 266 der Stifte 260 aufnehmen.

Die Lösung gemäß der ersten Variante des dritten Ausführungsbeispiels hat den Vorteil, dass sich die Stifte 210 einfach herstellen und einfach in dem Schwenkelement 60 verankern lassen, wobei sich außerdem gleichzeitig auch die Sacklöcher 270 in der Lagerwange 36 einfach herstellen lassen.

Vorzugsweise sind die Formschlusselemente 70 und 80 bei der ersten Variante des dritten Ausführungsbeispiels in gleichen Winkelabständen um die Achse 40 und in gleichen radialen Abständen zu dieser angeordnet, so dass bezüglich der Achse 40 Rotationssymmetrie vorliegt.

Auch bei dem vierten Ausführungsbeispiel ist das Schwenkelement 60 mit zwei Anschlagnocken 142 und 146 versehen, die mit Anschlagflächen 143 und 145 des Anschlagelements 144 zusammenwirken. Diesbezüglich wird vollinhaltlich auf die Ausführungen zum zweiten Ausführungsbeispiel Bezug genommen.

Ferner ist auch der Anschlagfläche 145 eine Tasche 148 zur Fixierung des Schwenkelements in der Ruhestellung R zugeordnet.

Das vierte Ausführungsbeispiel funktioniert somit ähnlich dem zweiten Ausführungsbeispiel.

Steht der Kugelhals 10 beim dritten Ausführungsbeispiel in seiner Ruhestellung R, so steht der Anschlagnocken 142 ebenfalls in einem Winkelabstand von ungefähr 200° zur ersten Anschlagfläche 143.

In der Ruhestellung R wird der Kugelhals 10 ausschließlich von der Rastkupplung 126 gehalten.

Soll nun ein Verschwenken des Kugelhalses 10 in die Arbeitsstellung A erfolgen, so wird der Antrieb 58 eingeschaltet und der Lagerbolzen 38 gedreht, wobei das in das Innengewinde 58 in der Lagerwange 36 eingreifende Außengewinde 48 des Lagerbolzens 38 bei sich lösender Rastkupplung 124 zu einer linearen Verschiebung des Schwenkelements 60 von seiner maximal von der Lagerwange 36 entfernten und der Ruhestellung R entsprechenden Stellung, in welcher der Anschlagnocken 146 in die Tasche 148 eingreift, in eine der Lagerwange 36 näherliegende Stellung erfolgt, in welche die Rastkupplung 126 greift und das Schwenkelement 60 mit dem Lagerbolzen 38 verschwenkt bei gleichzeitigem Verschwenken des Kugelhalses 10, und zwar so lange, bis der Anschlagnocken 142 an der Anschlagfläche 143 anliegt, wobei dieses Anliegen dem Erreichen der Arbeitsstellung A des Kugelhalses 10 bezüglich seiner Schwenkbewegung um die Schwenkachse 22 entspricht. Bei dem gesamten Schwenken ist die Rastkupplung 126 in Eingriff, so dass die Schwenkbewegung des Kugelhalses 10 der Drehbewegung des Lagerzapfens 38 entspricht.

Das Anlegen des Anschlagnockens 142 an der Anschlagfläche 144 hat jedoch eine Verhinderung einer weiteren Drehbewegung des Schwenkelements 60 mit dem Kugelhals 10 zur Folge, so dass nunmehr die Rastkupplung 126 bei weiterem Drehen des Lagerzapfens 38 gelöst wird, wobei die Nockenkörper 214 aus den kalottenförmigen Vertiefungen 224 herausbewegt werden und über die Stirnseite 226 weglaufen, beispielsweise bis zur nächsten kalottenförmigen Vertiefung 224.

Dies erlaubt den Lagerzapfen 38, sich weiterzudrehen und die zunächst beim Anschlagen des Anschlagnockens 142 an der Anschlagfläche 144 noch nicht in Eingriff befindlichen Formschlusselemente 70, 80 durch Verschieben des Schwenkelements 60 in Richtung der Lagerwange 36 in Eingriff zu bringen, wobei der Lagerzapfen 38 schließlich die Formschlusselemente 70, 80 ineinandergepresst und gegeneinander verspannt hält, so dass das Schwenkelement 60 und somit auch der Kugelhals drehfest und spielfrei an der Lagerwange 36 und somit an dem Schwenklagerkörper 30 festgelegt ist. Ist diese Stellung erreicht, kann auch der Antrieb 58 beispielsweise durch Erkennen des Überschreitens eines maximalen Drehmoments, abgeschaltet werden.

Soll die Verriegelung des Kugelhalses 10 in der Arbeitsstellung A gelöst werden, wird der Antrieb 58 umgeschaltet und der Lagerzapfen 38 in umgekehrter Richtung gedreht. Dies führt zunächst zu einem Verschieben des Schwenkelements 60 von der Lagerwange 36 weg, da die Formschlusselemente 70, 80 nach wie vor eine Drehung des Schwenkelements 60 verhindern. Erst wenn das Schwenkelement 60 soweit in Richtung 52 von der Lagerwange 36 weg verschoben ist, dass die Formschlusselemente 70 und 80 außer Eingriff kommen, kann wieder eine Drehbewegung des Schwenkelements 60 durch Greifen der Rastkupplung 126 erfolgen, diese erfolgt vorzugsweise jedoch synchron zum Lagerzapfen 38 nur dann, wenn die Nockenkörper 214 wieder in die kalottenähnliche Vertiefungen 224 eingreifen.

Zum Betrieb der erfindungsgemäßen Anhängekupplungen ist, wie exemplarisch im Zusammenhang mit dem vierten Ausführungsbeispiel in Fig. 12 dargestellt, eine Steuerung 300 vorgesehen, welche einerseits dazu dient, den Antrieb 58 anzusteuern und auch mit Strom zu versorgen.

Die Steuerung 300 fragt ferner noch einen Sensor 302 ab, welcher mit einer Tastnase 304 in eine Detektionsnut 306 im Schwenkelement 60 eingreift.

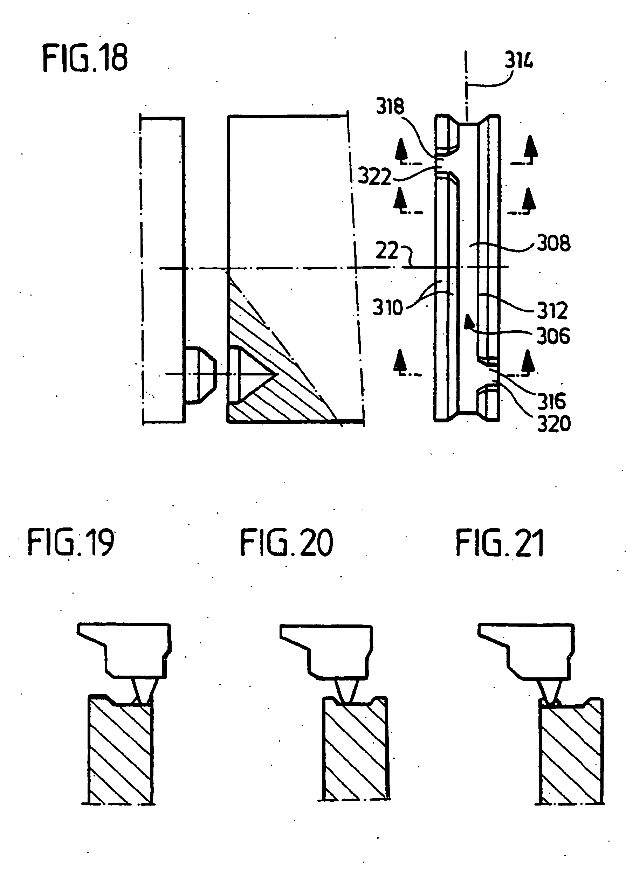

Die Detektionsnut 306 umfasst, wie in Fig. 18 im Detail dargestellt, einen Mittelabschnitt 308, welcher zwischen zwei Nutwänden 310 und 312 verläuft, und jeweils in einen Querabschnitt 316 bzw. 318 übergeht, wobei der Querabschnitt 316 der Detektionsnut 306 in Richtung der Schwenkachse 22 in Form einer Ausnehmung 320 in der Nutwand 312 ausgebildet ist, während der Querabschnitt 318 als Ausnehmung 322 in der Nutwand 310 ausgebildet ist.

Sowohl die endseitigen Querabschnitte 316 und 318 sowie der Mittelabschnitt 308 der Detektionsnut 306 dienen zur Überwachung der korrekten Bewegung des Schwenkelements 60 beim Schwenken von der Ruhestellung R in die Arbeitsstellung A.

Steht beispielsweise das Schwenkelement 60 in der Arbeitsstellung A, so steht die Tastnase, wie in Fig. 19 dargestellt, in dem Querabschnitt 316 der Detektionsnut 306.

Wird nun von der Steuerung 300 der Antrieb 58 so angesteuert, dass ein Lösen des Schwenkelements 60 in der Arbeitsstellung A erfolgen soll, so führt dies - wie bereits beschrieben - zunächst zu einer ausschließlichen linearen Verschiebung des Schwenkelements 60 weg von der Lagerwange 36 so lange, bis die Formschlusselemente 70 und 80 außer Eingriff kommen.

Der Mittelabschnitt 308 der Detektionsnut 306 ist nun so relativ zum Querabschnitt 316 so angeordnet, dass die Tastnase 304 gerade dann im Mittelabschnitt 308 steht, wenn die Formschlusselemente 70 und 80 außer Eingriff kommen und sich das Schwenkelement 60 zu drehen beginnt.

In diesem Fall steht die Tastnase 304 im Mittelabschnitt und kann sich somit längs des Mittelabschnitts 308 der Detektionsnut 306 bewegen, so dass eine Drehung des Schwenkelements 60 möglich ist, ohne dass die Tastnase 304 mit den Nutwänden 310 oder 312 kollidiert.

Dabei ist der Abstand zwischen den Nutwänden 310 und 312 so bemessen, dass auch die während des Schwenkens des Schwenkelements 60 von der Arbeitsstellung A in die Ruhestellung R zusätzlich erfolgende Linearverschiebung zu keiner Kollision der Tastnase 304 mit den Nutwänden 310 oder 312 führt.

Die Drehung des Schwenkelements 60 erfolgt so lange, bis die Tastnase 304 in dem Mittelabschnitt 308 ungefähr in Höhe des Querabschnitts 318 steht und der zweite Anschlagnocken 146 an der entsprechenden Anschlagfläche 154 anliegt, welche die Ruhestellung R definiert. In diesem Fall ist die Drehung des Schwenkelements 60 um die Schwenkachse 22 beendet und es erfolgt nur noch eine Linearverschiebung des Schwenkelements 60 und zwar weg von der Lagerwange 36 in Richtung der Lagerwange 34, so dass der Tastnocken 304 in den Querabschnitt 318 einfährt.

Aus der vorstehenden Beschreibung ergibt sich somit, dass die Detektionsnut 306 so ausgeführt ist, dass in allen Abschnitten keine Kollision mit der Tastnase 304 erfolgt, sofern das Schwenkelement 60 und somit auch der Kugelhals 10 die vorgesehenen Schwenkbewegungen um die Schwenkachse 22 und Linearbewegungen in Richtung der Schwenkachse 22 ausführen.

Das heißt, dass die Steuerung 300 das Signal des Tasters 302 als eine Art "Notaussignal" abfragt, denn eine Betätigung der Tastnase 304, beispielsweise durch die Nutwände 310 und 312 erfolgt nur dann, wenn die Bewegung des Schwenkelements 60 von der vorgesehenen Bewegungsform abweicht.

Wird beispielsweise die Schwenkbewegung des Kugelhalses 10 und somit auch die Schwenkbewegung des Schwenkelements 60 unterbrochen, so dass beispielsweise die Rastkupplung 126 auslöst, so führt dies dazu, dass zwar die Drehbewegung des Schwenkelements 60 unterbrochen wird, jedoch nicht die Linearverschiebung in Richtung der Schwenkachse 22. Dauert die Unterbrechung der Schwenkbewegung an, so verbleibt die Tastnase 304 in dem Mittelabschnitt 308 und bei zunehmender Linearverschiebung in Richtung der Lagerwange 34 erfolgt irgendwann eine Kollision der Nutwand 310 mit der Tastnase 304 und somit ein Betätigen des Tasters 302.

Ist die Unterbrechung nur temporär, so erreicht trotzdem die Tastnase 304 bei ihrer Bewegung längs des Mittelabschnitts 308 nicht den Querabschnitt 318 ohne Kollision mit der Nutwand 310, da aufgrund der Unterbrechung der Schwenkbewegung des Schwenkelements 60 die Linearverschiebung in Richtung der Schwenkachse 22 ohne Schwenkbewegung fortgesetzt wurde, so dass die Tastnase 304 sich weiter als bei einer normalen Schwenkbewegung der Nutwand 310 annähert und somit vor Erreichen des Querabschnitts 318 mit der Nutwand 310 kollidiert.

In umgekehrter Weise überwacht die Tastnase 304 auch die Bewegung von der Ruhestellung R in die Arbeitsstellung A, wobei in diesem Fall bei einer Unterbrechung der Schwenkbewegung Kollisionen mit der Nutwand 312 auftreten.

Um ferner sicher gehen zu können, dass das Schwenkelement 60 mit den Formschlusselementen 70 wirklich in der Arbeitsstellung A in Eingriff mit den Formschlusselementen 80 ist, ist der Steuerung 300 noch ein weiterer Taster 330 zugeordnet, der beispielsweise an der Lagerwange 36 angeordnet ist und die Stellung des Schwenkelements 60 oder die Stellung des Formschlusselements 70 oder auch beispielsweise die Stellung des Anschlagnockens 142 dann abfragt, wenn diese in der Arbeitsstellung A stehen.

Damit ist die Steuerung 300 in der Lage durch ein positives Signal den ordnungsgemäß in der Arbeitsstellung verriegelnden Zustand des Schwenkelements 60 festzustellen.

Um außerdem den Elektromotor für den Antrieb 58 rechtzeitig abschalten zu können, ist vorzugsweise in der Steuerung 300 eine Stromüberwachungsschaltung 332 vorgesehen, welche den Strom für den Elektromotor des Antriebs 58 überwacht und somit erkennt, wenn der Antrieb 58 aufgrund des Erreichens der Arbeitsstellung A bei ineinander verspannten Formschlusselementen 70 und 80 blockiert ist und somit der Strom ansteigt. Erfolgt eine derartige Blockierung des Antriebs 58 nach dem Signal des Tasters 330, welcher erkennt, da die Formschlusselemente 70 und 80 ordnungsgemäß in Eingriff sind, so weiß die Steuerung 300, dass der Motor 58 abgeschaltet werden kann.

Erfolgt jedoch ein derartiges Blockieren des Antriebs 58 ohne dass der Taster 330 das Signal für das Erreichen der Arbeitsstellung A gegeben hat, oder meldet der Taster 302 ein Signal und stellt somit eine Störung des Ablaufs der Schwenkbewegung fest, so kehrt die Steuerung 300 die Laufrichtung um und versucht die vorhergehende Endstellung, das heißt die vorhergehende Arbeitsstellung A oder Ruhestellung R zu erreichen.

Erfolgt bei diesem Versuch der Richtungsumkehr erneut ein Signal des Tasters 302 oder eine Blockierung des Antriebs 58 so wird durch die Steuerung 300 eine erneute Richtungsumkehr vorgenommen und dann, wenn nach der dritten Richtungsumkehr wiederum ein Signal des Tasters 302 gegeben wird oder der Antrieb 58 blockiert wird, ein Stillsetzen und die Meldung einer Störung.

## Patentansprüche

1. Anhängekupplung für Kraftfahrzeuge, umfassend einen fahrzeugfest angeordneten Schwenklagerkörper (30), an welchem ein Schwenkelement (60) um eine Schwenkachse (22) schwenkbar gelagert ist, einen sich ausgehend vom Schwenkelement (60) erstreckenden Kugelhals (10), der an seinem dem Schwenkelement (60) abgewandten Ende eine Kupplungskugel trägt, und eine Verriegelungsvorrichtung zur formschlüssigen Festlegung des Schwenkelements (60) gegenüber dem Schwenklagerkörper (30), wobei das Schwenkelement (60) am Schwenklagerkörper (30) in Richtung seiner Schwenkachse (22) verschiebbar gelagert ist und durch Verschieben des Schwenkelements (60) in Richtung der Schwenkachse (22) das Schwenkelement (60) in eine gegenüber dem Schwenklagerkörper (30) schwenkbare Stellung, in welcher das Schwenkelement (60) zwischen einer Arbeitsstellung und einer Ruhestellung verschwenkbar ist, und eine gegenüber dem Schwenklagerkörper (30) durch Formschluss drehfest festgelegte Stellung bringbar ist, und
**dadurch gekennzeichnet, dass** das Schwenkelement (60) mittels eines motorischen, einen Bestandteil der Anhängekupplung bildenden, Antriebs (58) in Richtung der Schwenkachse (22) in die gegenüber dem Schwenklagerkörper (30) schwenkbare und in die gegenüber dem Schwenklagerkörper (30) durch Formschluss drehfest festgelegten Stellung bewegt wird, dass das Schwenkelement (60) in Richtung der Schwenkachse (22) zwischen der gegenüber dem Schwenklagerkörper (30) verschwenkbaren Stellung und einer Haltestellung bewegt wird, in welcher das Schwenkelement (60) am Schwenklagerkörper (30) drehfest fixiert ist, und dass das Schwenkelement (60) sowohl in der Ruhestellung (R) als auch in der Arbeitsstellung (A) des Kugelhalses (10 in der einen Haltestellung steht.

2. Anhängekupplung nach Anspruch 1, **dadurch gekennzeichnet, dass** das Schwenkelement (60) mit mindestens einem Formschlusselement (70) drehfest verbunden ist.

3. Anhängekupplung nach Anspruch 2, **dadurch gekennzeichnet, dass** das mindestens eine erste Formschlusselement (70) relativ zum Schwenkelement (60) feststehend angeordnet ist.

4. Anhängekupplung nach Anspruch 2 oder 3, **dadurch gekennzeichnet, dass** der Schwenklagerkörper (30) mit mindestens einem, im Wesentlichen gegenüber der Schwenkachse (22) drehfesten zweiten Formschlusselement (80) verbunden ist.

5. Anhängekupplung nach Anspruch 4, **dadurch gekennzeichnet, dass** das mindestens eine zweite Formschlusselement (80) relativ zum Schwenklagerkörper (30) unbeweglich fixiert ist.

6. Anhängekupplung nach Anspruch 4 bis 5, **dadurch gekennzeichnet, dass** das erste Formschlusselement (70) und das zweite Formschlusselement (80) mit dem jeweils anderen Formschlusselement (80, 70) in Eingriff bringbar ist.

7. Anhängekupplung nach einem der Ansprüche 4 bis 6, **dadurch gekennzeichnet, dass** mindestens eines der Formschlusselemente (70, 80) sich in Eingreifrichtung verjüngende Formschlussflächen (232, 246; 264, 274) aufweist, welche zur drehfesten Festlegung des Schwenkelements (60) relativ zum Schwenklagerkörper (30) dient.

8. Anhängekupplung nach Anspruch 7, **dadurch gekennzeichnet, dass** die sich in Eingreifrichtung verjüngenden Flächen (232, 246; 264, 274) konisch aufeinander zu verlaufen.

9. Anhängekupplung nach einem der Ansprüche 4 bis 8, **dadurch gekennzeichnet, dass** die Formschlusselemente (70, 80) parallel zur Eingreifrichtung verlaufende Formschlussflächen (234, 244; 266, 276) aufweisen.

10. Anhängekupplung nach Anspruch 9, **dadurch gekennzeichnet, dass** die in Eingreifrichtung parallel verlaufenden Formschlussflächen (234, 244; 266, 276) sich an die sich in Eingreifrichtung verjüngenden Formschlussflächen (232, 246; 264, 274) anschließen.

11. Anhängekupplung nach einem der voranstehenden Ansprüche, **dadurch gekennzeichnet, dass** das Schwenkelement (60) relativ zum Schwenklagerkörper (30) mittels der Formschlusselemente (70, 80) in zueinander entgegengesetzten Drehrichtungen um die Schwenkachse (22) festlegbar ist.

12. Anhängekupplung nach einem der voranstehenden Ansprüche, **dadurch gekennzeichnet, dass** das Schwenkelement (60) in der Arbeitsstellung (A) des Kugelhalses (10) mittels der Formschlusselemente (70, 80) drehfest gegenüber dem Schwenklagerkörper (30) festlegbar ist.

13. Anhängekupplung nach einem der voranstehenden Ansprüche, **dadurch gekennzeichnet, dass** die Formschlusselemente (70, 80) in ihrer das Schwenkelement (60) relativ zum Schwenklagerkörper (30) drehfest fixierenden Stellung mittels eines Keilgetriebes (48, 50; 98, 100; 182, 188) verspannbar sind.

14. Anhängekupplung nach Anspruch 13, **dadurch gekennzeichnet, dass** die Formschlusselemente (70, 80) zwischen dem Schwenkelement (60) und einer Lagerwange (36) des Schwenklagerkörpers (30) angeordnet sind und dass das Keilgetriebe (48, 50; 182 188) einerseits auf das Schwenkelement (60) und andererseits auf die Lagerwange (36) wirkt.

15. Anhängekupplung nach Anspruch 14, **dadurch gekennzeichnet, dass** das Keilgetriebe (48, 50; 182, 188) unmittelbar an der Lagerwange (36) angreift.

16. Anhängekupplung nach einem der Ansprüche 13 bis 15, **dadurch gekennzeichnet, dass** das Keilgetriebe durch zwei ineinandergreifende Gewinde (48, 50; 98, 100; 182, 188) gebildet ist.

17. Anhängekupplung nach einem der voranstehenden Ansprüche, **dadurch gekennzeichnet, dass** zur Erzeugung der Bewegung des Schwenkelements (60) in Richtung der Schwenkachse (22) relativ zum Schwenklagerkörper (30) ein Keilgetriebe (48, 50; 98, 100; 182; 188) vorgesehen ist.

18. Anhängekupplung nach Anspruch 17, **dadurch gekennzeichnet, dass** dasselbe Keilgetriebe (48, 50; 98, 100; 182, 188) einerseits zum Verschieben des Schwenkelements (60) relativ zum Schwenklagerkörper (30) und andererseits zum Verspannen der Formschlusselemente (70, 80) dient.

19. Anhängekupplung nach einem der voranstehenden Ansprüche, **dadurch gekennzeichnet, dass** der motorische Antrieb (58) das Keilgetriebe antreibt.

20. Anhängekupplung nach einem der voranstehenden Ansprüche, **dadurch gekennzeichnet, dass** das Schwenkelement (60) in seiner relativ zum Schwenklagerkörper (30) verschwenkbaren Stellung mittels eines motorischen Antriebs (66, 58) zwischen einer Arbeitsstellung (A) und einer Ruhestellung (R) verschwenkbar ist.

21. Anhängekupplung nach Anspruch 20, **dadurch gekennzeichnet, dass** der motorische Antrieb (66) ausschließlich für die Schwenkbewegung des Schwenkelements (60) vorgesehen ist.

22. Anhängekupplung nach Anspruch 20, **dadurch gekennzeichnet, dass** ein Schwenkantrieb (120) für das Schwenkelement (60) von einem motorischen Antrieb (58) abgeleitet ist, welcher die Verschiebung des Schwenkelements (60) in Richtung der Schwenkachse (22) zwischen den einzelnen Stellungen bewirkt.

23. Anhängekupplung nach Anspruch 22, **dadurch gekennzeichnet, dass** der Schwenkantrieb (120) mit dem motorischen Antrieb für die Bewegung des Schwenkelements (60) in Richtung der Schwenkachse (22) über eine drehmomentauslösende Kupplung (122, 124) gekoppelt ist.

24. Anhängekupplung nach einem der voranstehenden Ansprüche, **dadurch gekennzeichnet, dass** das Schwenkelement (60) mittels eines Lagerzapfens (38) an dem Schwenklagerkörper (30) gelagert ist.

25. Anhängekupplung nach Anspruch 24, **dadurch gekennzeichnet, dass** das Schwenkelement (60) gegenüber dem Lagerzapfen (38) drehbar ist.

26. Anhängekupplung nach Anspruch 24 oder 25, **dadurch gekennzeichnet, dass** über eine Verschiebung des Lagerzapfens (38) in Richtung der Schwenkachse (22) eine Verschiebung des Schwenkelements (60) zwischen den einzelnen Stellen erreichbar ist.

27. Anhängekupplung nach Anspruch 26, **dadurch gekennzeichnet, dass** über den Lagerzapfen (38) die Formschlusselemente (70, 80) zur drehfesten Festlegung des Schwenkelements (60) miteinander verspannbar sind.

28. Anhängekupplung nach einem der Ansprüche 24 oder 26 oder 27, **dadurch gekennzeichnet, dass** der Lagerzapfen (38) drehbar im Schwenklagerkörper (30) gelagert ist, um über den Lagerzapfen (38) eine Schwenkbewegung des Schwenkelements (60) relativ zum Schwenklagerkörper (30) zu bewirken.

29. Anhängekupplung nach Anspruch 28, **dadurch gekennzeichnet, dass** zwischen dem drehbar angetriebenen Lagerzapfen (38) und dem Schwenkelement (60) eine drehmomentauslösende Kupplung (122, 124) vorgesehen ist.

30. Anhängekupplung nach einem der voranstehenden Ansprüche, **dadurch gekennzeichnet, dass** diese eine Steuerung (300) umfasst und dass mit der Steuerung (300) mittels mindestens eines Sensors (302) die Bewegungen des Schwenkelements (60) von der Arbeitsstellung (A) in die Ruhestellung (R) und umgekehrt überwachbar sind.

31. Anhängekupplung nach Anspruch 30, **dadurch gekennzeichnet, dass** die Steuerung (300) die Schwenkbewegung des Schwenkelements (60) dann unterbricht, wenn die Steuerung (300) eine Abweichung der Bewegung des Schwenkelements (60) von der vorgegebenen Bewegungsform erkennt.

32. Anhängekupplung nach Anspruch 30 oder 31, **dadurch gekennzeichnet, dass** die einzelnen Stellungen des Schwenkelements (60) mittels des Sensors (302) detektierbar sind.

33. Anhängekupplung nach Anspruch 32, **dadurch gekennzeichnet, dass** mittels des Sensors (302) die Bewegung des Schwenkelements (60) dadurch erfassbar ist, dass dieser eine Kulissenbahn (306) abtastet.

34. Anhängekupplung nach einem der Ansprüche 30 bis 33, **dadurch gekennzeichnet, dass** die Steuerung (300) eine Stromüberwachung (332) für den motorischen Antrieb (58) aufweist und dass bei Überschreiten eines vorgegebenen Stroms die Steuerung (300) den Antrieb (58) unterbricht.

## Claims

1. A trailer coupling for motor vehicles comprising a pivot bearing body (30) which is rigidly attached to the vehicle and upon which there is mounted a pivotal element (60) that is pivotal about a pivotal axis (22), a ball neck (10) which extends from the pivotal element (60) and carries a coupling ball at the end thereof remote from the pivotal element (60), and a locking device for fixing the pivotal element (60) relative to the pivot bearing body (30) in interlocking manner, wherein the pivotal element (60) is mounted on the pivot bearing body (30) such that it is displaceable along the pivotal axis (22) thereof and by displacement of the pivotal element (60) along the pivotal axis (22), the pivotal element (60) is moveable into a position wherein it is pivotal relative to the pivot bearing body (30) and wherein the pivotal element (60) is pivotal between an operative position and a rest position, and into a position wherein it is fixed relative to the pivot bearing body (30) in mutually non-rotatable manner by means of an interlocking arrangement, and
**characterised in that**, the pivotal element (60) is moved by means of a motorised drive (58), forming a part of the trailer coupling, in the direction along the pivotal axis (22) into the position pivotal relative to the pivot bearing body (30) and into the position non-rotatably fixed in interlocking manner relative to the pivotal bearing body (30), **in that** the pivotal element (60) is moved along the pivotal axis (22) between the position in which it is pivotal relative to the pivot bearing body (30) and a holding position in which the pivotal element (60) is fixed on the pivot bearing body (30) in mutually non-rotatable manner, and **in that** the pivotal element (60) is in said one holding position both in the rest position (R) and in the operative position (A) of the ball neck (10).

2. A trailer coupling in accordance with Claim 1, **characterised in that** the pivotal element (60) is connected to at least one interlocking element (70) in mutually non-rotatable manner.

3. A trailer coupling in accordance with Claim 2, **characterised in that** the at least one first interlocking element (70) is stationary relative to the pivotal element (60).

4. A trailer coupling in accordance with Claim 2 or 3, **characterised in that** the pivot bearing body (30) is connected to at least one second interlocking element (80) which is substantially non-rotatable relative to the pivotal axis (22).

5. A trailer coupling in accordance with Claim 4, **characterised in that** the at least one second interlocking element (80) is fixed immovably relative to the pivot bearing body (30).

6. A trailer coupling in accordance with Claim 4 to 5, **characterised in that** the first interlocking element (70) and the second interlocking element (80) are arranged to be moved into engagement with the respective other interlocking element (80, 70).

7. A trailer coupling in accordance with any of the Claims 4 to 6, **characterised in that** at least one of the interlocking elements (70, 80) has interlocking surfaces (232, 246; 264, 274) which taper in the direction of engagement, said surfaces serving to fix the pivotal element (60) relative to the pivot bearing body (30) in mutually non-rotatable manner.

8. A trailer coupling in accordance with Claim 7, **characterised in that** the interlocking surfaces (232, 246; 264, 274) which taper in the direction of engagement extend conically towards one another.

9. A trailer coupling in accordance with any of the Claims 4 to 8, **characterised in that** the interlocking elements (70, 80) have interlocking surfaces (234, 244; 266, 276) which extend in parallel with the direction of engagement.

10. A trailer coupling in accordance with Claim 9, **characterised in that** the interlocking surfaces (234, 244; 266, 276) which extend in parallel with the direction of engagement adjoin the interlocking surfaces (232, 246; 264, 274) which taper in the direction of engagement.

11. A trailer coupling in accordance with any of the preceding Claims, **characterised in that** the pivotal element (60) is fixable relative to the pivot bearing body (30) in mutually opposite directions of rotation about the pivotal axis (22) by means of the interlocking elements (70, 80).

12. A trailer coupling in accordance with any of the preceding Claims, **characterised in that**, in the operative position (A) of the ball neck (10), the pivotal element (60) is fixable relative to the pivot bearing body (30) in mutually non-rotatable manner by means of the interlocking elements (70, 80).

13. A trailer coupling in accordance with any of the preceding Claims, **characterised in that** the interlocking elements (70, 80) are restrainable in the position thereof in which the pivotal element (60) is fixed relative to the pivot bearing body (30) in mutually non-rotatable manner by means of a wedge mechanism (48, 50; 98, 100; 182, 188).

14. A trailer coupling in accordance with Claim 13, **characterised in that** the interlocking elements (70, 80) are arranged between the pivotal element (60) and a bearing cheek (36) of the pivot bearing body (30), and **in that** the wedge mechanism (48, 50; 182, 188) is effective on the pivotal element (60) on the one hand and on the bearing cheek (36) on the other.

15. A trailer coupling in accordance with Claim 14, **characterised in that** the wedge mechanism (48, 50; 182, 188) is in direct engagement with the bearing cheek (36).

16. A trailer coupling in accordance with any of the Claims 13 to 15, **characterised in that** the wedge mechanism is formed by two interengaging threads (48, 50; 98, 100; 182, 188).

17. A trailer coupling in accordance with any of the preceding Claims, **characterised in that** a wedge mechanism (48, 50; 98, 100; 182, 188) is provided for producing the movement of the pivotal element (60) in the direction of the pivotal axis (22) relative to the pivot bearing body (30).

18. A trailer coupling in accordance with Claim 17, **characterised in that** the same wedge mechanism (48,50; 98,100; 182,188) serves on the one hand for the displacement of the pivotal element (60) relative to the pivot bearing body (30) and on the other hand for restraining the interlocking surfaces.

19. A trailer coupling in accordance with any of the preceding Claims, **characterised in that** the motorised drive (58) drives the wedge mechanism.

20. A trailer coupling according to any of the preceding Claims, **characterised in that** the pivotal element (60) in its position pivotal relative to the pivotal bearing body (30) is pivotable by means of a motorised drive (66,58) between an operative position (A) and a rest position (R).

21. A trailer coupling in accordance with Claim 20, **characterised in that** the motorised drive (66) is provided exclusively for the pivotal movement of the pivotal element (60).

22. A trailer coupling in accordance with Claim 20, **characterised in that** a pivoting drive (120) for the pivotal element (60) is derived from a motorised drive (58), which is effective for the displacement of the pivotal element (60) along the pivotal axis (22) between the individual positions.

23. A trailer coupling in accordance with Claim 22, **characterised in that** the pivoting drive (120) is coupled via a torque producing coupling (122, 124) to the motorised drive for the movement of the pivotal element (60) along the pivotal axis (22).

24. A trailer coupling in accordance with any of the preceding Claims, **characterised in that** the pivotal element (60) is mounted on the pivot bearing body (30) by means of a bearing pin (38).

25. A trailer coupling in accordance with Claim 24, **characterised in that** the pivotal element (60) is rotatable relative to the bearing pin (38).

26. A trailer coupling in accordance with Claim 24 or 25, **characterised in that** a displacement of the pivotal element (60) between the individual positions is attained by means of a displacement of the bearing pin (38) along the pivotal axis (22).

27. A trailer coupling in accordance with Claim 26, **characterised in that** the interlocking elements (70, 80) are arranged to be restrained together by the bearing pin (38) for the purposes of fixing the pivotal element (60) in non-rotatable manner.

28. A trailer coupling in accordance with any of the Claims 24 or 26 or 27, **characterised in that** the bearing pin (38) is rotatably mounted in the pivot bearing body (30) to effect a pivotal movement of the pivotal element (60) relative to the pivot bearing body (30) by means of the bearing pin (38).

29. A trailer coupling in accordance with Claim 28, **characterised in that** a torque producing coupling (122, 124) is provided between the rotatably driven bearing pin (38) and the pivotal element (60).

30. A trailer coupling in accordance with any of the preceding Claims, **characterised in that** it comprises a control system (300), and **in that** the movements of the pivotal element (60) from the operative position (A) into the rest position (R) and vice versa are arranged to be monitored by said control system (300) by means of at least one sensor (302).

31. A trailer coupling in accordance with Claim 30, **characterised in that** the control system (300) interrupts the pivotal movement of the pivotal element (60) in the event of the control system (300) detecting a deviation of the movement of the pivotal element (60) from the predetermined form of movement.

32. A trailer coupling in accordance with Claim 30 or 31, **characterised in that** the individual positions of the pivotal element (60) are detectable by means of the sensor (302).

33. A trailer coupling in accordance with Claim 32, **characterised in that** the movement of the pivotal element (60) is detectable by means of the sensor (302) in that said sensor scans a slotted track (306).

34. A trailer coupling in accordance with any of Claims 30 to 33, **characterised in that** the control system (300) comprises a current monitoring arrangement (332) for the motorised drive (58), and **in that** the control system (300) interrupts the drive (58) in the event that a predetermined current is exceeded.

## Revendications

1. Attelage de remorque pour véhicules automobiles, comportant un corps de palier pivotant (30), qui est monté de manière solidaire au véhicule et sur lequel un élément pivotant (60) est monté pivotant autour d'un axe de pivotement (22), un col de boule d'attelage (10), qui s'étend à partir de l'élément pivotant (60) et qui porte une boule d'attelage sur son extrémité opposée à l'élément pivotant (60), et un dispositif de verrouillage pour la fixation par complémentarité de forme de l'élément pivotant (60) par rapport au corps de palier pivotant (30), l'élément pivotant (60) étant logé sur le corps de palier pivotant (30) de manière mobile en translation dans la direction de son axe de pivotement (22), et, par le déplacement de l'élément pivotant (60) dans la direction de l'axe de pivotement (22), l'élément pivotant (60) pouvant être amené dans une position pivotante par rapport au corps de palier pivotant (30), dans laquelle l'élément pivotant (60) est apte à pivoter entre une position de travail et une position de repos, et dans une position fixée immobile en rotation par fixation par complémentarité de forme par rapport au corps de palier pivotant (30), et
**caractérisé en ce que** l'élément pivotant (60) est déplacé au moyen d'un entraînement à moteur (58) formant un élément de l'attelage dans la direction de l'axe de pivotement (22) dans la position pivotante par rapport au corps de palier pivotant (30) et la position fixée immobile en rotation par fixation par complémentarité de forme par rapport au corps de palier pivotant (30), **en ce que** l'élément pivotant (60) est déplacé dans la direction de l'axe de pivotement (22) entre la position pivotante par rapport au corps de palier pivotant (30) et une position de retenue, dans laquelle l'élément pivotant (60) est fixé immobile en rotation sur le corps de palier pivotant (30) et **en ce que** tant dans la position de repos (R) que dans la position de travail (A) du col (10) de la boule d'attelage, l'élément pivotant (60) est dans la position de retenue.

2. Attelage de remorque selon la revendication 1, **caractérisé en ce que** l'élément pivotant (60) est relié de manière solidaire en rotation à au moins un élément de fixation par complémentarité de forme (70).

3. Attelage de remorque selon la revendication 2, **caractérisé en ce que** l'au moins un premier élément de fixation par complémentarité de forme (70) est disposé de manière fixe par rapport à l'élément pivotant (60).

4. Attelage de remorque selon la revendication 2 ou 3, **caractérisé en ce que** le corps de palier pivotant (30) est relié à au moins un deuxième élément de fixation par complémentarité de forme (80) sensiblement immobile en rotation par rapport à l'axe de pivotement (22).

5. Attelage de remorque selon la revendication 4, **caractérisé en ce que** l'au moins un deuxième élément de fixation par complémentarité de forme (80) est fixé de manière immobile par rapport au corps de palier pivotant (30).

6. Attelage de remorque selon les revendications 4 à 5, **caractérisé en ce que** le premier élément de fixation par complémentarité de forme (70) et le deuxième élément de fixation par complémentarité de forme (80) peuvent être amenés en prise avec le respectivement autre élément de fixation par complémentarité de forme (80, 70).

7. Attelage de remorque selon l'une quelconque des revendications 4 à 6, **caractérisé en ce qu'**au moins l'un des éléments de fixation par complémentarité de forme (70, 80) comporte des surfaces de fixation par complémentarité de forme (232, 246 ; 264, 274), qui se rétrécissent dans le sens d'engagement et qui sont destinées à la fixation immobile en rotation de l'élément pivotant (60) par rapport au corps de palier pivotant (30).

8. Attelage de remorque selon la revendication 7, **caractérisé en ce que** les surfaces (232, 246 ; 264, 274) se rétrécissant dans le sens d'engagement s'étendent en se terminant selon une forme conique.

9. Attelage de remorque selon l'une quelconque des revendications 4 à 8, **caractérisé en ce que** les éléments de fixation par complémentarité de forme (70, 80) comportent des surfaces de fixation par complémentarité de forme (234, 244 ; 266, 276) orientées parallèlement au sens d'engagement.

10. Attelage de remorque selon la revendication 9, **caractérisé en ce que** les surfaces de fixation par complémentarité de forme (234, 244 ; 266, 276) orientées parallèlement au sens d'engagement font suite aux surfaces de fixation par complémentarité de forme (232, 246 ; 264, 274) qui se rétrécissent dans le sens d'engagement.

11. Attelage de remorque selon l'une quelconque des revendications précédentes, **caractérisé en ce que** l'élément pivotant (60) peut être immobilisé par rapport au corps de palier pivotant (30), au moyen des éléments de fixation par complémentarité de forme (70, 80), dans des sens de rotation opposés entre eux autour de l'axe de pivotement (22).

12. Attelage de remorque selon l'une quelconque des revendications précédentes, **caractérisé en ce que**, dans la position de travail (A) du col (10) de la boule d'attelage, l'élément pivotant (60) peut être immobilisé au moyen des éléments de fixation par complémentarité de forme (70, 80) de manière immobile en rotation par rapport au corps de palier pivotant (30).

13. Attelage de remorque selon l'une quelconque des revendications précédentes, **caractérisé en ce que** les éléments de fixation par complémentarité de forme (70, 80) peuvent être bloqués dans leur position fixant de manière immobile en rotation l'élément pivotant (60) par rapport au corps de palier pivotant (30) au moyen d'un mécanisme de clavette (48, 50 ; 98, 100 ; 182, 188).

14. Attelage de remorque selon la revendication 13, **caractérisé en ce que** les éléments de fixation par complémentarité de forme (70, 80) sont disposés entre l'élément pivotant (60) et une joue (36) du corps de palier pivotant (30), et **en ce que** le mécanisme de clavette (48, 50 ; 182, 188) agit, d'une part, sur l'élément pivotant (60) et, d'autre part, sur la joue (36) du palier.

15. Attelage de remorque selon la revendication 14, **caractérisé en ce que** le mécanisme de clavette (48, 50 ; 182, 188) s'applique directement sur la joue (36) du palier.

16. Attelage de remorque selon l'une quelconque des revendications 13 à 15, **caractérisé en ce que** le mécanisme de clavette est formé par deux filetages (48, 50 ; 98, 100 ; 182, 188) engrenant l'un dans l'autre.

17. Attelage de remorque selon l'une quelconque des revendications précédentes, **caractérisé en ce que** pour générer le déplacement de l'élément pivotant (60) dans la direction de l'axe de pivotement (22) par rapport au corps de palier pivotant (30), il est prévu un mécanisme de clavette (48, 50 ; 98, 100 ; 182, 188).

18. Attelage de remorque selon la revendication 17, **caractérisé en ce que** le même mécanisme de clavette (48, 50 ; 98, 100 ; 182, 188) est utilisé, d'une part, pour le mouvement de translation de l'élément pivotant (60) par rapport au corps de palier pivotant (30) et, d'autre part, pour le blocage des éléments de fixation par complémentarité de forme (70, 80).

19. Attelage de remorque selon l'une quelconque des revendications précédentes, **caractérisé en ce que** l'entraînement à moteur (58) actionne le mécanisme de clavette.

20. Attelage de remorque selon l'une quelconque des revendications précédentes, **caractérisé en ce que** l'élément pivotant (60), dans sa position pivotante par rapport au corps de palier pivotant (30), peut pivoter au moyen d'un entraînement à moteur (66, 58) entre une position de travail (A) et une position de repos (R).

21. Attelage de remorque selon la revendication 20, **caractérisé en ce que** l'entraînement à moteur (66) est prévu exclusivement pour le mouvement de pivotement de l'élément pivotant (60).

22. Attelage de remorque selon la revendication 20, **caractérisé en ce qu'**une commande de pivotement (120) pour l'élément pivotant (60) est dérivée d'un entraînement à moteur (58), qui induit le mouvement de l'élément pivotant (60) dans la direction de l'axe de pivotement (22) entre les différentes positions.

23. Attelage de remorque selon la revendication 22, **caractérisé en ce que** la commande de pivotement (120) est couplée à l'entraînement à moteur pour le mouvement de l'élément pivotant (60) dans la direction de l'axe de pivotement (22), par l'intermédiaire d'un accouplement (122, 124) déclenchant le couple.

24. Attelage de remorque selon l'une quelconque des revendications précédentes, **caractérisé en ce que** l'élément pivotant (60) est logé au moyen d'un tourillon (38) sur le corps de palier pivotant (30).

25. Attelage de remorque selon la revendication 24, **caractérisé en ce que** l'élément pivotant (60) est apte à tourner par rapport au tourillon (38).

26. Attelage de remorque selon la revendication 24 ou 25, **caractérisé en ce qu'**un déplacement de l'élément pivotant (60) entre les différentes positions peut être obtenu par un déplacement du tourillon (38) dans la direction de l'axe de pivotement (22).

27. Attelage de remorque selon la revendication 26, **caractérisé en ce que** par l'intermédiaire du tourillon (38), les éléments de fixation par complémentarité de forme (70, 80) peuvent être bloqués les uns avec les autres pour la fixation immobile en rotation de l'élément pivotant (60).

28. Attelage de remorque selon une des revendications 24 ou 26 ou 27, **caractérisé en ce que** le tourillon (38) est monté rotatif dans le corps de palier pivotant (30) pour induire, par l'intermédiaire du tourillon (38), un mouvement de pivotement de l'élément pivotant (60) par rapport au corps de palier pivotant (30).

29. Attelage de remorque selon la revendication 28, **caractérisé en ce qu'**un accouplement (122, 124) déclenchant le couple est prévu entre le tourillon (38) entraîné en rotation et l'élément pivotant (60).

30. Attelage de remorque selon l'une quelconque des revendications précédentes, **caractérisé en ce qu'**il comporte une commande (300) et **en ce que** les mouvements de l'élément pivotant (60) depuis la position de travail (A) dans la position de repos (R) et inversement peuvent être contrôlés avec la commande (300) au moyen d'au moins un capteur (302).

31. Attelage de remorque selon la revendication 30, **caractérisé en ce que** la commande (300) interrompt le mouvement de pivotement de l'élément pivotant (60) lorsque la commande (300) détecte une divergence du mouvement de l'élément pivotant (60) par rapport à la forme de mouvement prédéfini.

32. Attelage de remorque selon la revendication 30 ou 31, **caractérisé en ce que** les différentes positions de l'élément pivotant (60) peuvent être détectées au moyen du capteur (302).

33. Attelage de remorque selon la revendication 32, **caractérisé en ce que** le mouvement de l'élément pivotant (60) peut être détecté au moyen du capteur (302), par le fait que celui-ci balaie une coulisse (306).

34. Attelage de remorque selon l'une quelconque des revendications 30 à 33, **caractérisé en ce que** la commande (300) comporte un contrôle du courant (332) pour l'entraînement à moteur (58) et **en ce que** la commande (300) interrompt l'entraînement (58) en cas de dépassement d'un courant prédéterminé.
